# FASCICULE DE BREVET EUROPEEN

(11) **EP 3 313 179 B1**
(45) Date de publication et mention de la délivrance du brevet: **21.08.2019**
(21) Numéro de dépôt: 16741096.8
(22) Date de dépôt: 23.06.2016
(51) Int. Cl.: A01M 7/00, B05B 3/10, B05B 7/04

(54) **MODULE DE PULVÉRISATION COMPACT, SYSTÈME DE PULVÉRISATION ET DE PILOTAGE D'UNE PLURALITÉ DE TELS MODULES ET PROCÉDÉ DE PILOTAGE DES MODULES D'UN TEL SYSTÈME**
KOMPAKTE SPRITZEINHEIT, SPRITZSYSTEM SOWIE SYSTEM UND VERFAHREN ZUR STEUERUNG MEHRERER DIESER SPRITZEINHEITEN
COMPACT SPRAYER DEVICE, SPRAYER SYSTEM, SYSTEM AND METHOD FOR THE CONTROL OF A PLURALITY OF SAID SPRAYER DEVICES

(30) Priorité: 25.06.2015 FR 1555895
(43) Date de publication de la demande: 02.05.2018
(73) Titulaire: Pellenc (Société Anonyme), 84120 Pertuis (FR)
(72) Inventeur: PELLENC, Roger, 84120 Pertuis (FR); GIALIS, Jean-Marc, 84460 Cheval Blanc (FR)
(74) Mandataire: Nuss, Laurent
(86) Numéro de dépôt international: PCT/FR2016/051548
(87) Numéro de publication internationale: WO 2016/207559

(56) Documents cités:
- DE-A1- 2 823 253
- FR-A- 1 454 562
- US-A- 4 609 145
- US-A- 5 278 423
- US-A- 6 152 382

## Description

L'invention se situe dans le domaine des appareils projetant un liquide sous la forme de gouttelettes mêlées à un flux d'air porteur sur une cible constituée par exemple d'un matelas végétal, et a pour objet un module de pulvérisation compact. Elle a également pour objet un système de pulvérisation et de pilotage d'une pluralité de tels modules et un procédé de pilotage des modules d'un tel système.

Elle est applicable notamment dans le domaine agricole pour le traitement des grandes cultures, de l'arboriculture ou de la viticulture. Elle sera décrite ci-après par souci de simplification dans son application au secteur viticole, nécessitant d'importants apports en produits phytosanitaires. L'apport de ces derniers dans la nature peut générer à plus ou moins long terme des conséquences graves sur le plan sanitaire comme sur le plan écologique mais aussi au plan économique. Ces produits sont en effet l'une des principales sources de pollution des eaux, des sols et des nappes phréatiques et leur inhalation voire leur ingestion à des conséquences irréversibles sur la santé des utilisateurs. Sur le plan économique, outre le coût important des produits et de leur mise en oeuvre, l'inefficacité d'un traitement peut entrainer des dommages irréversibles sur la récolte.

Dans ce contexte, les pouvoirs publics ont durci ces dernières années les normes sur les appareils de traitement, imposant par exemple en France un contrôle technique obligatoire tous les 5 ans des appareils de pulvérisation. Dans un autre axe, des matières actives identifiées comme étant les plus dangereuses sont interdites ou leur dose homologuée réduite. Il est clair que ces normes ne vont pas cesser d'évoluer à l'avenir et donc durcir plus avant la situation règlementaire des machines et des produits. Cette évolution nécessite la conception de nouvelles machines de pulvérisation permettant d'utiliser de façon judicieuse des doses minimales de matière active vers une cible végétale visée tout en limitant leur consommation énergétique pour préserver à la fois l'environnement, la santé des végétaux concernés mais aussi celle des opérateurs ayant à piloter de telles machines.

On connaît plusieurs types de pulvérisateurs utilisés dans le domaine viticole pour les traitements de couverture ou localisés à la zone des grappes de raisins, et notamment les quatre types de pulvérisateurs suivants : à jet projeté, à jet porté, pneumatique et centrifuge.

Tous ces appareils ont en commun la projection sur la végétation de bouillie (terme utilisé pour définir le liquide à projeter composé généralement d'un mélange d'eau et de matière active) qui est acheminée sous forme liquide et sous pression dans une canalisation aboutissant à une buse de pulvérisation. La bouillie est micronisée en gouttelettes au niveau de la buse, et dirigée vers la végétation par différents moyens selon la technologie de l'appareil de pulvérisation. La buse comporte un ajutage calibré, le plus souvent constitué par l'orifice formé dans une plaquette de faible épaisseur, cet orifice traversant de la plaquette pouvant avoir des formes variées (cylindre, prisme, cône, ...) mais de petite taille pour pouvoir transformer le liquide sous pression en amont en gouttelettes en aval. L'ajutage définit le débit de bouillie qui sera pulvérisée et la taille des gouttelettes. Ce débit de bouillie n'est toutefois pas contrôlé précisément car dépendant notamment des conditions de pression du liquide en amont, différentes pour chaque buse, car fonction de la géométrie et de la longueur de canalisation entre la pompe et la buse, et de l'usure au cours du temps de l'ajutage dû à l'abrasion de son orifice au passage des produits.

Dans les appareils à jet projeté, comportant de façon générale une pluralité de buses pour couvrir la zone à pulvériser, la bouillie est transformée en gouttelettes au niveau de chaque buse par l'effet combiné de la pression du liquide en amont de l'ajutage et de la géométrie de l'ajutage, cet effet communiquant aussi auxdites gouttelettes une énergie cinétique et une direction de leur pulvérisation. Les gouttelettes sont ainsi projetées directement dans l'air ambiant généralement sous la forme d'un cône d'épandage d'angle plus ou moins important dépendant là aussi de la forme de l'ajutage et de la pression de la bouillie en amont de ce dernier. D'autre part, plus la pression de la bouillie est élevée, plus les gouttelettes formées en sortie de l'ajutage auront une vitesse importante mais plus elles seront alors de petite taille, limitant leur énergie cinétique et donc leur capacité à atteindre les feuilles et les grappes, en ajoutant le fait de leur évaporation entre la sortie de la buse et la végétation ciblée. Les gouttelettes peuvent être aussi soumises à une dérive importante de leur trajectoire en cas de vent. Il est aussi connu sur ce type d'appareil qu'une grande variation de pression ne génère qu'une faible variation de débit, tout en faisant varier de façon importante la taille des gouttelettes. Ce type d'appareil définit alors un optimum de fonctionnement entre la pression et l'ajutage au niveau de chaque buse qui n'autorise que peu ou pas de réglage du débit de bouillie pour pulvériser la végétation ciblée, c'est-à-dire que le débit n'est pas contrôlé en amont de l'ajutage. Le changement de débit de bouillie projeté vers la végétation nécessite de changer toutes les buses (ou leur ajutage) par une intervention humaine longue, fastidieuse, et nécessitant le port d'équipements de sécurité.

Dans les appareils à jet porté, la bouillie est toujours acheminée sous pression au niveau de la buse avec un effet similaire aux appareils à jet projeté. Dans cette technologie toutefois, un flux d'air à grande vitesse (grand débit d'air à des vitesses de l'ordre de 100 à 200 km/h) va entourer la buse pour porter les gouttelettes vers la végétation, accentuant la vitesse des gouttelettes vers la végétation ciblée et favorisant leur pénétration. Ce flux d'air est fourni par un système de ventilation centralisé sur la machine et va être canalisé ensuite vers chaque buse de pulvérisation. Ainsi, avec un appareil à jet porté, la taille des gouttelettes est toujours déterminée par la combinaison de la pression et de l'ajutage, mais c'est essentiellement le flux d'air au niveau de l'ajutage qui va transporter les gouttelettes dans une trajectoire orientée vers la végétation ciblée, en diminuant fortement la sensibilité de ladite trajectoire à l'influence des vents extérieurs, et en limitant l'évaporation des gouttelettes au cours de leur trajectoire.

Toutefois, à l'instar de la technologie à jet projeté, le débit au niveau de chaque buse n'est qu'indicatif, non contrôlé, différent d'une buse à une autre et ne peut varier que sur une faible plage de débit, nécessitant de changer les buses (ou leur ajutage) pour modifier le débit de bouillie à pulvériser. De plus, l'air nécessaire à la constitution du flux d'air est généré de façon centralisé puis distribué vers les différentes buses au travers d'un circuit de canalisations long et complexe générant des pertes de charge importantes, des vitesses d'air différentes et non contrôlées d'une buse à l'autre ainsi qu'une consommation énergétique surabondante. Les turbines de fortes puissances utilisées ici sont de plus particulièrement bruyantes.

Contrairement aux appareils à jet porté ou à jet projeté, les appareils pneumatiques forment directement les gouttelettes à partir d'un flux d'air à grande vitesse accéléré au niveau de la buse (généralement de 300 à 500 km/h) appelée ici un éclateur (souvent un simple ajutage). La bouillie est amenée sous pression au niveau de l'éclateur pour former une veine de liquide non micronisée en l'absence de flux d'air. Le flux d'air à grande vitesse est accéléré au niveau de l'éclateur (par exemple par effet venturi) pour générer la micronisation de la veine de liquide en gouttelettes. La taille des gouttelettes sur de tels appareils est liée à la vitesse du flux d'air en relation étroite avec le débit de la bouillie au niveau de l'éclateur. Un changement de vitesse d'air doit alors toujours s'accompagner d'un changement de débit, et de façon générale d'ajutage de l'éclateur, pour ne pas pénaliser la qualité de pulvérisation. Et inversement, un changement d'ajutage pour modifier le débit nécessitera aussi d'adapter la vitesse du flux d'air. Le principe de fonctionnement de ces appareils génère là aussi comme les technologies précédemment évoquées des débits et des vitesses d'air différents d'une buse à une autre résultant dans la pulvérisation au niveau de la végétation ciblée d'un débit de bouillie indicatif et non contrôlé. La génération du flux d'air est là aussi centralisée, fortement consommatrice d'énergie et particulièrement bruyante.

Les inconvénients majeurs de ces 3 premières technologies peuvent être résumés comme suit:
- les paramètres de pulvérisation, tels que par exemple le débit ou la vitesse d'air, sont indicatifs au niveau de chaque buse, différents d'une buse à une autre et dérivent dans le temps suite notamment à l'usure des ajutages. Ces systèmes ne permettent donc pas de contrôler et maitriser précisément ces paramètres de pulvérisation au niveau de chaque buse, tout autant qu'ils ne permettent pas faire varier ces paramètres dans une plage importante avec la même buse pour être adaptés de façon instantanée à la végétation rencontrée en cours de traitement. Pourtant de nombreux facteurs tels que la nature du terrain, l'âge et le cépage de la vigne, peuvent entrainer des quantités de masse végétale très différentes d'un cep de vigne à l'autre qui nécessiteraient des débits de bouillie pouvant être modifiés rapidement et sur des plages importantes pour s'adapter aux masses végétales en regard des buses de pulvérisation. Ce point incite l'opérateur à plutôt positionner les calibrages (buses, ajutages, éclateurs) des machines de l'état de l'art à leur débit maximum de façon à éviter de perdre du temps à les changer autant que cela est nécessaire, ce qui entraîne alors une consommation surabondante de bouillie. Il n'est donc pas envisageable avec ces technologies d'imaginer des variations dynamiques des paramètres de pulvérisation sur la végétation rencontrée en cours de traitement,
- le changement de débit, le réglage, le nettoyage et la maintenance imposent une intervention humaine longue et fastidieuse qui, compte tenu de la toxicité des bouillies, nécessite l'utilisation de protections individuelles et des protocoles opératoires très contraignants, voire irréalisables (changement de dizaines de buses ou d'ajutages pour modifier un débit ou changer le produit de traitement, nettoyage des cuves et des canalisations de bouillie, ...),
- la petite taille des ajutages pour assurer l'efficacité de la micronisation impose une bouillie ayant un fort taux de dilution des produits phytosanitaires pour éviter leur colmatage par des agglomérats de bouillie mal dispersés dans l'eau, empêchant ainsi de travailler avec des volumes d'épandages de bouillie faibles (inférieurs par exemple à 100 litres par hectare, alors que les volumes classiques varient dans une plage de l'ordre de 200 à 800 litres par hectare en fonction de la végétation et du type de bouillie à pulvériser). De fait, l'autonomie du pulvérisateur, compte tenu du fort taux de dilution des produits phytosanitaires, nécessite des ensembles de pulvérisation comprenant de grosses cuves de 1000 à 2000 litres de liquides, et par conséquent des volumes équivalents d'eau claire. Le poids de cet ensemble nécessite des véhicules tracteurs puissants pour associer la traction de l'ensemble de pulvérisation et son fonctionnement,
- les pressions nécessaires au niveau des ajutages sont élevées, pouvant atteindre facilement des valeurs de l'ordre de 30 bars, entrainant des pompes de technologie coûteuses, lourdes et encombrantes, et demandant une énergie importante dissipée au niveau de la pompe.
- la génération du flux d'air dans les technologies pneumatiques ou à jet porté se fait grâce à une turbine unique de grand diamètre, très bruyante, associée généralement à un réseau de gaines flexibles qui entrainent des pertes de charges importantes, nécessitant un surdimensionnement de la turbine et de fait une puissance de l'ordre de 30 kW entrainant une consommation plus importante du véhicule tracteur. En outre, la turbine a une grande inertie qui génère un temps de démarrage et d'arrêt de celle-ci sur une durée de plusieurs secondes ne permettant pas de fréquentes séquences d'arrêt et de démarrage durant le traitement (bout de rang, pointe, absence momentanée de végétation, manoeuvre...), ce qui entraine alors une consommation inutile et polluante de bouillie et de carburant.

La technologie centrifuge, qui est la plus récente dans ce domaine, permet de résoudre une partie des problèmes posés par les trois autres technologies précitées.

Le document FR 2 497 439 a pour objet une installation de pulvérisation utilisant la technologie centrifuge, dans laquelle les gouttelettes sont formées par une buse rotative de grand diamètre, sur la partie centrale de laquelle un ajutage projette la bouillie à pulvériser. Un collecteur en forme de secteur d'anneau, d'angle fixe ou réglable, est fixé en regard du pourtour de la buse rotative, sans contact avec elle, de façon à intercepter la bouillie pulvérisée dans le secteur correspondant au collecteur et de limiter la zone de pulvérisation à la partie correspondant au secteur libre du collecteur. Les gouttelettes sont ici formées par éclatement due à la force centrifuge de la veine liquide de bouillie quand elle arrive à l'extrémité de la buse en rotation. Cette technologie de buse rotative possède l'avantage d'épandre de faibles quantités de bouillie, quantités qui nécessiteraient dans les autres technologies de réduire considérablement la taille des ajutages pour obtenir un faible débit de bouillie, en augmentant ainsi le risque de colmatage de ceux-ci. Tout en utilisant le même ajutage, le choix approprié de l'angle couvert par le collecteur en forme de secteur d'anneau permet de régler le débit de bouillie pulvérisé vers la végétation dépendant de la taille du secteur ouvert dans le collecteur et donc forcément inférieur au débit de bouillie arrivant sur la buse.

Toutefois, l'installation du document FR 2 497 439 possède les inconvénients suivants:
- la partie de bouillie non répandue sur la végétation est normalement recyclée par l'anneau collecteur. Mais une partie de cette bouillie est perdue de façon non contrôlée par débordement ou égouttage du produit recyclé du collecteur, entrainant une perte de bouillie et une pollution non souhaitée de l'environnement. Ainsi, toute la bouillie arrivant au niveau de l'ajutage n'est pas directement projetée vers la végétation.
- la bouillie recyclée perd de ses caractéristiques du fait de son exposition à l'atmosphère : la concentration en produit actifs est modifiée du fait d'une première pulvérisation (par évaporation de l'eau par exemple), la bouillie peut être recyclée plusieurs fois avant d'être épandue sur la végétation. Ainsi, la qualité de la bouillie pulvérisée vers la végétation n'est pas constante,
- le débit de bouillie projeté vers la végétation dépend de l'angle d'ouverture du secteur libre du collecteur. Il est donc impossible de modifier ce débit sur une même portion de matelas végétal en regard du secteur libre, puisque seule alors une portion plus grande de matelas végétal sera impactée par l'ouverture du secteur libre du collecteur. Le changement de débit sur une portion identique de matelas végétal nécessitera alors le changement de l'ajutage avec les inconvénients des technologies précédemment évoquées,
- le débit projeté vers la végétation est indicatif et ne peut être contrôlé précisément compte tenu des pertes et des recyclages de liquide évoqués ci-dessus,
- l'énergie cinétique des gouttelettes pour atteindre la végétation est générée uniquement par la buse rotative. On retrouve ainsi les inconvénients de la technologie à jet projeté.

Toujours dans la technologie centrifuge utilisant des buses rotatives ayant pour effet de microniser un liquide, c'est-à-dire une bouillie sous forme liquide en gouttelettes, le document US 6,152,382 a pour objet un appareil de pulvérisation modulaire incluant au moins un module de pulvérisation comprenant une tuyère formée par un tube cylindrique ouvert à ses deux extrémités, ladite tuyère générant un flux d'air porteur généré par un ventilateur axial positionné à l'une de ses extrémités, ledit flux d'air porteur agissant en sortie de tuyère sur une buse rotative, connue également sous le nom d'atomiseur rotatif, se présentant sous la forme d'une pièce conique dont l'extrémité dépasse de l'ouverture de sortie de la tuyère à l'extérieur de cette dernière. Ledit flux d'air porteur est toutefois décomposé en deux flux d'air laminaires, à savoir un flux d'air laminaire axial autour de la buse rotative et orienté axialement afin de répartir la bouillie uniformément sur une faible épaisseur de la partie conique de la buse rotative et communiquer une énergie cinétique aux gouttelettes générées par centrifugation à l'extrémité de la buse rotative dans une direction prévisible, et un flux d'air laminaire hélicoïdal organisé autour du flux d'air laminaire axial, le mélange des deux s'effectuant entre la sortie du module et le matelas végétal pour faire pénétrer les gouttelettes sur toutes les faces des feuilles dudit matelas végétal. La bouillie est acheminée dans chaque module par un tube d'amenée traversant la paroi de l'enceinte du module correspondant pour déboucher au niveau de la surface externe conique de la buse rotative dans une zone couverte par le flux d'air laminaire axial, à partir d'un réservoir central et par l'intermédiaire d'une ou plusieurs pompes (une pompe par rampe de pulvérisation de plusieurs modules) éloignées du module fournissant un débit indicatif au niveau de chaque module ainsi que des conditions de débit similaires d'un module à l'autre. Les débits au niveau de chaque module ne sont donc pas contrôlés et ne peuvent être modulés dans des plages sensiblement différentes d'un module à l'autre.

De plus, avec le type d'appareil divulgué par le document US 6,152,382, la bouillie arrive sur la surface conique de la buse rotative entourée du flux d'air laminaire axial générant un égouttage par combinaison de l'effet de la gravité et de l'aspiration générée par le flux d'air laminaire au niveau du tube d'amenée suivi par un décrochement de grosses gouttes dans le flux d'air laminaire axial, voire traversant les deux flux d'airs laminaires successifs pour aboutir hors de la surface végétale ciblée. Par ailleurs, l'effet vortex du flux d'air laminaire hélicoïdal rallonge considérablement le trajet des gouttelettes entre la sortie du module et le végétal, augmentant le risque de séchage des gouttelettes au cours de ce trajet, ces dernières perdant en effet rapidement l'énergie nécessaire pour atteindre le végétal ciblé. Mais aussi, les moyens développés pour générer chaque flux d'air de façon laminaire sous la forme de deux ensembles de canaux multicouches augmentent considérablement la surface de frottement entre l'air et ces canaux et donc les pertes de charge à l'intérieur du module, celles-ci étant encore accentuées dans la zone de cisaillement d'air générée à l'interface des deux flux d'air laminaires, à l'extérieur du module lors du mélange entre les deux flux d'air laminaires, mais aussi lors de leur interaction avec l'air ambiant en sortie de module. Le rendement électrique du système est ainsi sérieusement affecté. Plus encore, ce système nécessite la mise en place de deux moteurs par module pour générer d'une part les deux flux d'air laminaires et d'autre part la micronisation de la bouillie, ce qui a pour résultat d'augmenter le poids, l'encombrement et la complexité de gestion du système. Enfin, la mise en place d'électrovannes à distance du module permettant de distribuer la bouillie arrivant sur la buse rotative ne permet pas, en cas de coupure d'alimentation de la bouillie de stopper de façon instantanée la production de gouttes ou de gouttelettes compte tenu de l'interaction directe du flux d'air laminaire axial sur l'arrivée de bouillie de la buse rotative et de l'aspiration inéluctable par le flux d'air laminaire axial de la quantité de bouillie située entre l'électrovanne et l'extrémité du tube d'amenée.

La présente invention a pour but de pallier au moins un de ces inconvénients en proposant un module de pulvérisation permettant l'aspiration d'air ambiant et d'un liquide provenant d'un réservoir pour générer un flux d'air porteur capable de projeter ledit flux d'air mêlé dudit liquide à débit variable contrôlé sous la forme de gouttelettes vers une cible, avec une dynamique élevée, un excellent rendement énergétique et un très faible impact environnemental.

On entend par débit variable contrôlé, le débit d'un liquide issu d'un réservoir et fourni par un système d'alimentation en liquide sous la commande et/ou le contrôle d'une intelligence électronique, par exemple une unité de commande et de contrôle électronique fonctionnant sur la base d'un microprocesseur, permettant de réguler un débit donné selon une consigne de débit correspondante et ce indépendamment de la pression du circuit.

On entend par très faible impact environnemental, le fait de pouvoir éviter la projection de bouillie en dehors de la végétation ciblée, de pouvoir pulvériser la juste quantité de bouillie en adaptant en cours de pulvérisation le débit de bouillie de manière contrôlée en fonction de la végétation ciblée, d'éviter toute perte de bouillie par égouttage au sol, de pouvoir arrêter la pulvérisation de bouillie instantanément en l'absence de végétation, de pouvoir limiter la consommation d'eau claire pour la bouillie ou le nettoyage du système et enfin de limiter fortement la consommation d'énergie électrique nécessaire à l'opération de pulvérisation.

A cet effet, le module de pulvérisation compact, selon la présente invention, pour la pulvérisation d'un liquide sous forme de gouttelettes pour le traitement d'une cible, telle que par exemple une haie végétale, et destiné à équiper un système de pulvérisation et de pilotage comprenant une pluralité de modules de pulvérisation et un pupitre de commande permettant le pilotage individuel à distance de chaque module de pulvérisation, indépendamment des autres modules, ledit module de pulvérisation comprenant une unité de pulvérisation comprenant, d'une part, une tuyère avec une entrée d'air à l'une de ses extrémités et une sortie d'air à son autre extrémité, ladite tuyère entourant le long de son axe un espace interne contenant au moins un organe de pulvérisation, une canalisation pour l'alimentation en liquide de ce dernier, un ventilateur capable de générer axialement dans l'espace interne de la tuyère un flux d'air porteur autour dudit organe de pulvérisation pour porter vers la cible les gouttelettes créées et propulsées par ce dernier dans ledit flux d'air, de préférence dans l'espace interne, et un système d'entraînement de ventilateur pour l'entraînement dudit ventilateur, et en ce qu'il comprend en outre :
- un système d'alimentation en liquide relié fonctionnellement à la canalisation et comprenant une pompe électrique, de préférence une pompe volumétrique, plus préférentiellement une pompe péristaltique, le cas échéant associée à un capteur de débit, permettant de refouler, avec un débit variable contrôlé, le liquide, provenant d'un réservoir, dans ladite canalisation et une interface de raccordement permettant audit système de recevoir le liquide provenant du réservoir,
- un support permettant de maintenir fixement la pompe électrique à proximité de l'unité de pulvérisation,
- une unité électronique de commande et/ou de contrôle, par exemple implantée sur une carte électronique, prévue pour commander et/ou contrôler le fonctionnement du système d'entraînement de ventilateur et du système d'alimentation en liquide en étant reliée fonctionnellement auxdits systèmes d'entraînement et d'alimentation en liquide,
- un interface de communication individuelle permettant de relier fonctionnellement le module, directement ou indirectement, au pupitre de commande et une interface d'alimentation en énergie apte à être reliée fonctionnellement à une source d'énergie électrique pour permettre l'alimentation en énergie dudit module.

La présente invention a également pour objet un système de pulvérisation et de pilotage destiné à être embarqué sur une machine ou un engin mobile, ledit système comprenant une pluralité de modules de pulvérisation pour la pulvérisation d'un liquide sous forme de gouttelettes pour le traitement d'une cible telle que par exemple une haie végétale, ledit liquide provenant d'un réservoir, se caractérisant essentiellement en ce qu'il comprend en outre un pupitre de commande comprenant une unité centrale électronique de pilotage et une interface homme machine, dite IHM, reliée à cette dernière, chaque module de pulvérisation consistant en un module de pulvérisation compact tel que défini selon la présente invention et en ce que l'unité centrale électronique de pilotage est reliée fonctionnellement à chaque module de pulvérisation de sorte à permettre un pilotage individuel à distance de chaque module de pulvérisation, indépendamment du ou des autres modules de pulvérisation, à partir dudit pupitre de commande pour régler individuellement les paramètres de pulvérisation et de fonctionnement de chaque module de pulvérisation.

La présente invention a encore pour objet un procédé de pilotage d'une pluralité de modules de pulvérisation d'un système de pulvérisation et de pilotage pour la pulvérisation d'un liquide sous forme de gouttelettes pour le traitement d'une cible telle que par exemple une haie végétale, ledit liquide provenant d'un réservoir, ledit système de pulvérisation et de pilotage étant défini selon la présente invention, se caractérisant essentiellement en ce qu'il consiste à piloter individuellement chaque module de pulvérisation, indépendamment des autres modules de pulvérisation, à partir du pupitre de commande dudit système de pulvérisation et de pilotage pour régler et/ou contrôler individuellement les paramètres de fonctionnement et de pulvérisation de chaque module de pulvérisation.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 montre une vue en perspective et en éclaté d'un module selon l'invention, à l'état partiellement monté et comprenant une unité de pulvérisation à l'état monté, avec un organe de pulvérisation consistant en un atomiseur rotatif, dans une première forme de réalisation de ce dernier,
- la figure 2 représente une vue en coupe longitudinale du module représenté sur la figure 1 à l'état monté,
- la figure 3 montre une vue partielle en perspective et en éclaté partiel de l'unité de pulvérisation représentée sur la figure 1 à l'état non monté,
- la figure 4a montre une vue partielle en perspective de l'unité de pulvérisation représentée sur la figure 3 à l'état monté, avec la tuyère et le fuselage représentés partiellement de sorte à faire apparaître l'espace interne principal de la tuyère et l'espace interne secondaire du fuselage,
- la figure 4b montre l'unité de pulvérisation représentée sur la figure 4a, avec le fuselage 5 en entier,
- la figure 5 montre une vue en perspective de l'unité de pulvérisation représentée sur la figure 4, au niveau de son extrémité distale comprenant l'ouverture de sortie d'air, et dans une seconde forme de réalisation de l'atomiseur rotatif,
- la figure 6 montre une vue en perspective, avec arraché partiel de la pièce d'alimentation et de répartition et une vue en perspective de l'atomiseur rotatif, traversés axialement par l'arbre d'entraînement commun et représentés sur la figure 3,
- la figure 7 montre uniquement la pièce d'alimentation et de répartition, représentée sur la figure 6, du côté de son extrémité comportant les orifices d'alimentation,
- la figure 8 montre une vue en perspective d'un module selon l'invention avec un organe de pulvérisation consistant en un ajutage,
- la figure 9 montre une vue en perspective d'une rampe de plusieurs modules d'un système de pulvérisation et de pilotage du type de module représenté sur la figure 1,
- la figure 10 montre une vue en perspective du module représenté sur la figure 1, à l'état monté et de projection du liquide sous la forme d'un pinceau de gouttelettes,

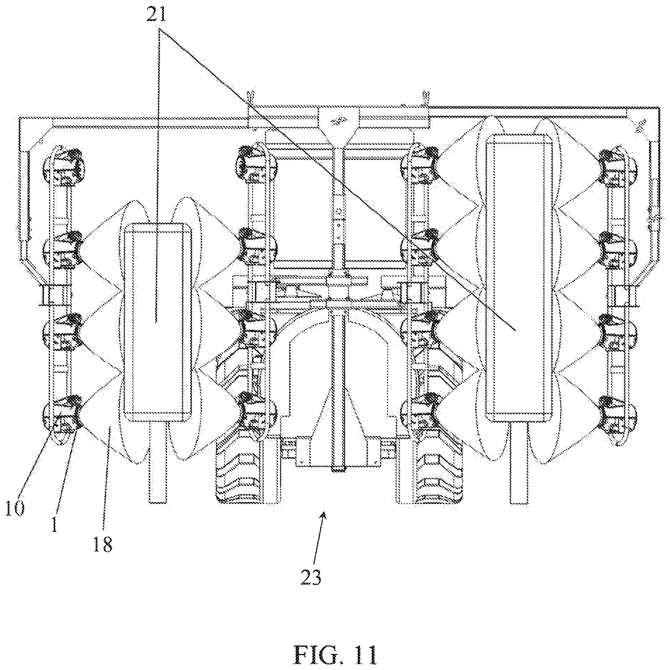

- la figure 11 montre une vue arrière d'un engin mobile portant une pluralité de modules, portés par des rampes, d'un système de pulvérisation et de pilotage selon l'invention,
- la figure 12 montre un schéma fonctionnel du système de pulvérisation et de pilotage selon l'invention.
- la figure 13 montre une vue partielle en coupe transversale selon A-A du module représenté sur la figure 2.

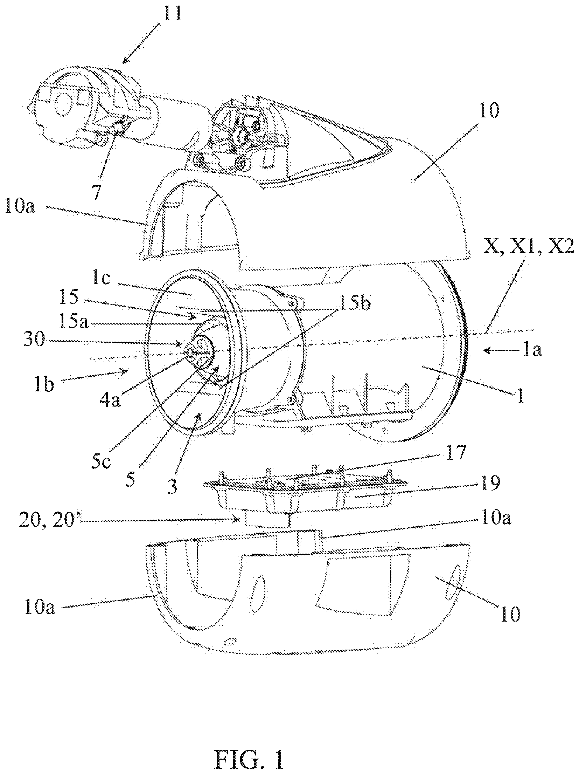

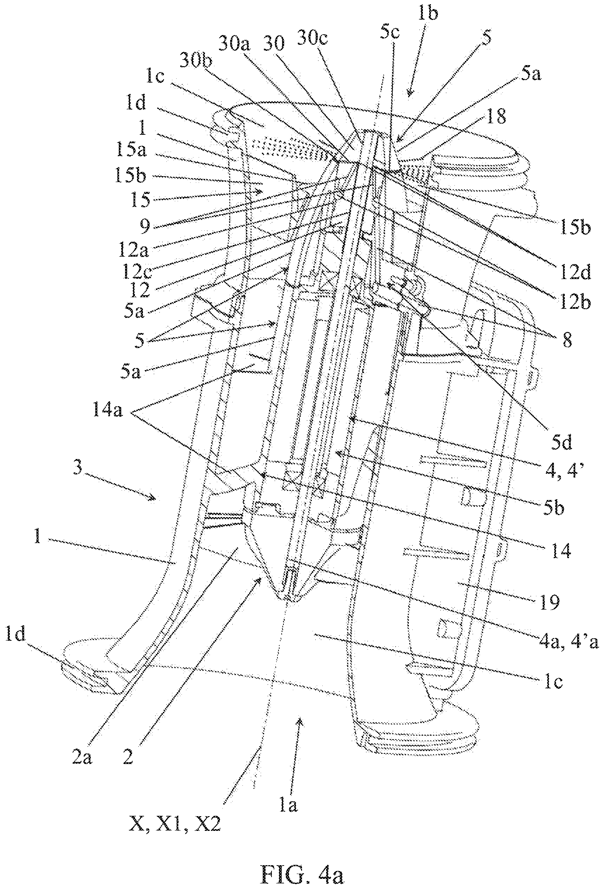

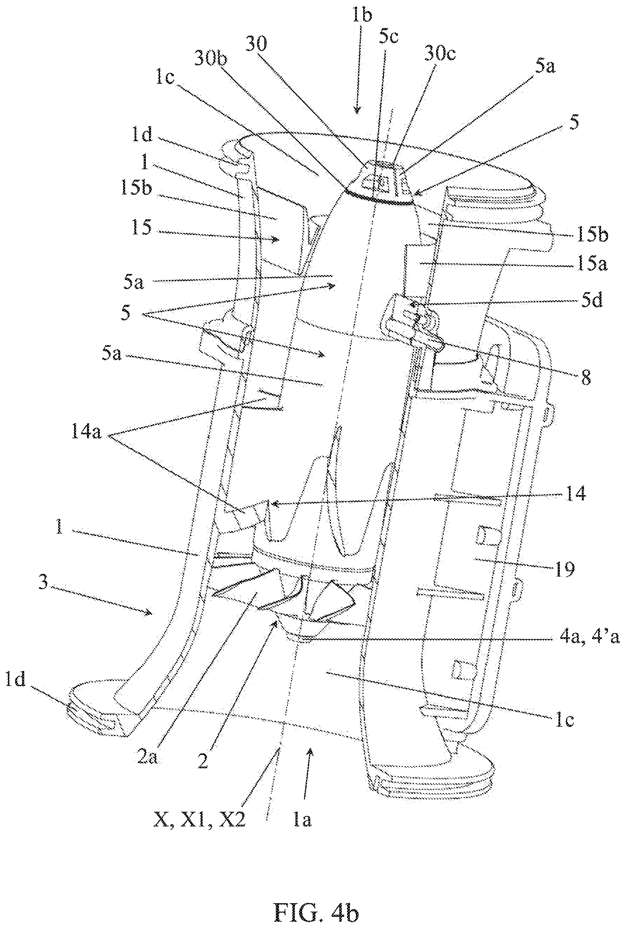

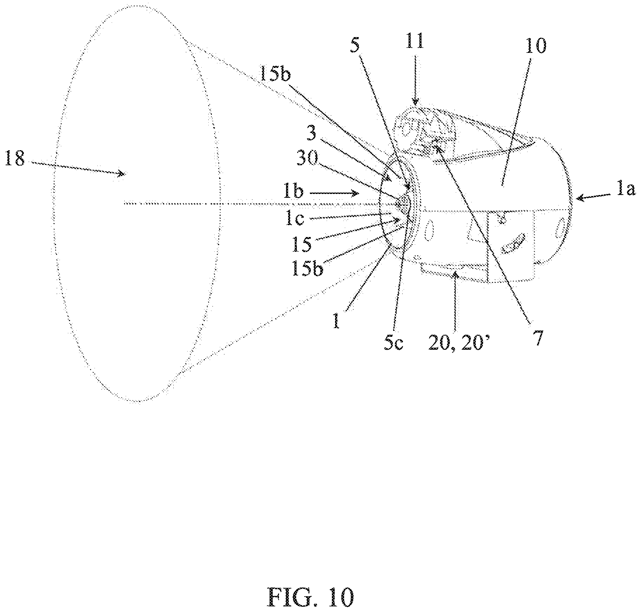

Les figures annexées montrent un module de pulvérisation compact, selon la présente invention, pour la pulvérisation d'un liquide sous forme de gouttelettes 18 pour le traitement d'une cible 21 telle que par exemple une haie végétale et destiné à équiper un système de pulvérisation et de pilotage comprenant une pluralité de modules de pulvérisation et un pupitre de commande 16 permettant de piloter individuellement à distance chaque module de pulvérisation, indépendamment des autres modules, ledit module de pulvérisation comprenant une unité de pulvérisation 3 comprenant, d'une part, une tuyère 1 avec une ouverture d'entrée d'air la à l'une de ses extrémités et une ouverture de sortie d'air 1b à son autre extrémité. On peut voir également, notamment sur les figures 1, 2, 3, 4a, 4b, 5, 8, 10, 13 que la tuyère entoure, le long de son axe X, un espace interne 1c contenant au moins un organe de pulvérisation 30 ou 31, une canalisation 8, 9 pour l'alimentation en liquide de ce dernier, un ventilateur 2 capable de générer dans l'espace interne 1c de la tuyère 1 un flux d'air porteur autour de l'organe de pulvérisation 30 ou 31 pour porter vers la cible 21 les gouttelettes créées et propulsées par l'atomiseur 30 dans ledit flux d'air, de préférence dans l'espace interne 1c, et un système d'entraînement de ventilateur 4, 4a pour l'entraînement dudit ventilateur.

Conformément à l'invention, l'organe de pulvérisation 30 ou 31 est adapté pour transformer le liquide en gouttelettes 18 et pour propulser ces dernières dans le flux d'air porteur et de préférence dans l'espace interne 1c de la tuyère 1.

Toujours conformément à l'invention, un tel module comprend en outre :
- un système d'alimentation en liquide 7, 11 relié fonctionnellement à la canalisation 8, 9 et comprenant une pompe électrique 11, de préférence une pompe volumétrique, plus préférentiellement une pompe péristaltique, le cas échéant associée à un capteur de débit, permettant de refouler, avec un débit variable contrôlé, le liquide, provenant d'un réservoir 26, dans ladite canalisation 8, 9 et une interface de raccordement 7 permettant audit système de recevoir le liquide provenant du réservoir 26,
- un support 10 permettant de maintenir fixement la pompe électrique 11 à proximité de l'unité de pulvérisation,
- une unité électronique de commande et/ou de contrôle 17, par exemple implantée sur une carte électronique, prévue pour commander et/ou contrôler le fonctionnement du système d'entraînement de ventilateur 4, 4a et du système d'alimentation en liquide 7, 11 en étant reliée fonctionnellement auxdits systèmes d'entraînement et d'alimentation en liquide,
- un interface de communication individuelle 20 permettant de relier fonctionnellement le module, directement ou indirectement, au pupitre de commande 16 et une interface d'alimentation en énergie 20' apte à être reliée fonctionnellement à une source d'énergie électrique 22 pour permettre l'alimentation en énergie dudit module.

Le liquide est aussi communément appelé bouillie dans le métier de la viticulture.

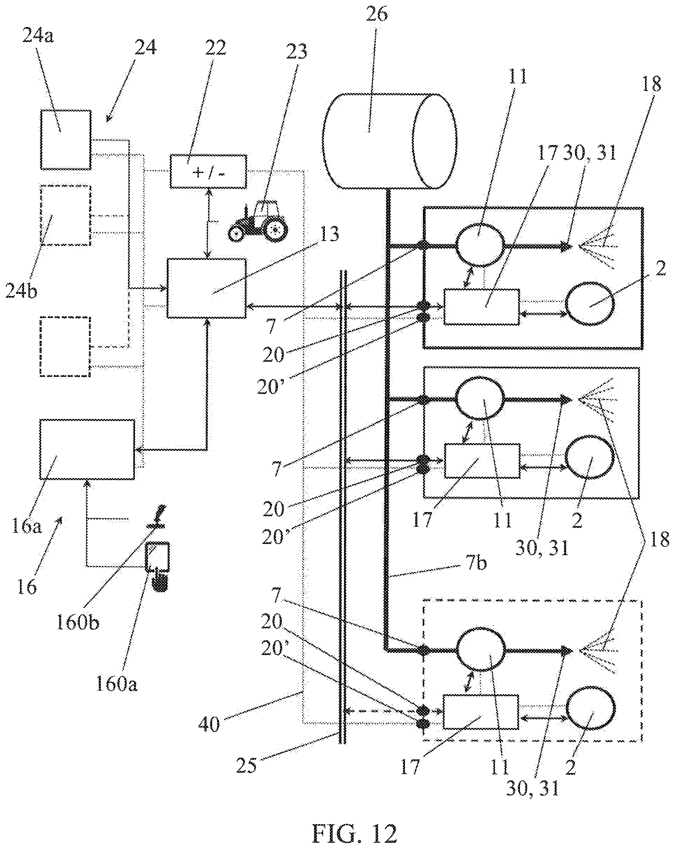

La source d'énergie électrique 22 peut consister, par exemple, en une génératrice électrique accouplée à un engin mobile 23 tel qu'un véhicule tracteur, l'énergie pouvant être distribuée par un réseau d'alimentation électrique 40 (Figure 12).

La canalisation 8, 9 permettant d'alimenter en liquide l'organe de pulvérisation 30 ou 31 dans l'unité de pulvérisation 3 peut être raccordé à la pompe électrique 11. Cette dernière peut être raccordée hydrauliquement, via une interface de raccordement 7 et une liaison hydraulique 7b, au réservoir 26 (voir notamment les figures 1, 10 et 12).

Dans un mode de réalisation préférentiel, comme on peut le voir sur les figures 1, 2, 3, 4a, 4b, 5, 6 et 10 l'organe de pulvérisation peut consister en un atomiseur rotatif 30 monté en rotation autour d'un axe X1 et le module selon l'invention peut comprendre en outre un système d'entraînement d'atomiseur rotatif 4', 4'a prévu pour pouvoir transmettre le couple et la rotation à l'atomiseur rotatif 30, ce dernier étant capable, sous l'effet de sa rotation, de fragmenter par centrifugation le liquide en gouttelettes 18 et de les propulser dans le flux d'air porteur, de préférence dans un plan sensiblement perpendiculaire à l'axe de la tuyère 1, de préférence dans l'espace interne 1c de la tuyère 1.

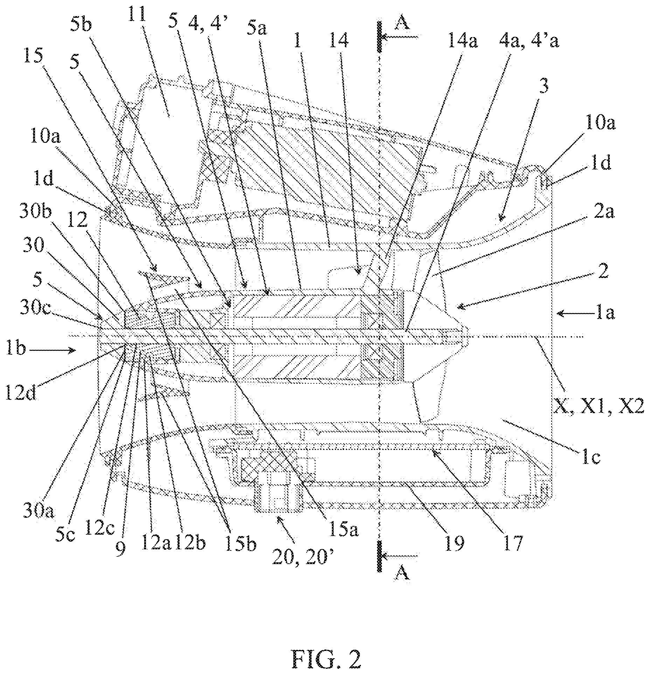

Le système d'entraînement d'atomiseur rotatif 4', 4'a peut comprendre un moteur électrique 4', de préférence un moteur électrique sans balais, relié fonctionnellement à l'unité électronique de commande et/ou de contrôle 17 et un arbre d'entraînement 4'a apte à être entraîné en rotation autour de son axe X1 par ledit moteur électrique et à transmettre le couple et la rotation à l'atomiseur rotatif 30 (figures 2, 3, 4a, 4b, 5).

Dans un mode de réalisation préférentiel, le système d'entraînement de ventilateur 4, 4a et le système d'entraînement d'atomiseur rotatif 4', 4'a peuvent être prévus de sorte à former un seul système d'entraînement de ventilateur et d'atomiseur rotatif 4, 4a, 4', 4'a commun à la fois au ventilateur 2 et à l'atomiseur rotatif 30 . Un tel système d'entraînement de ventilateur et d'atomiseur rotatif commun peut comprendre un unique moteur électrique 4, 4' commun, de préférence un moteur électrique sans balais dit moteur brushless, relié fonctionnellement à l'unité électronique de commande et/ou de contrôle 17 et un unique arbre d'entraînement commun 4a, 4'a apte à être entraîné en rotation autour de son axe de rotation X1, X2 par ledit moteur électrique commun et à transmettre le couple et la rotation à la fois au ventilateur 2 et à l'atomiseur rotatif 30 . Les premier et second axes de rotation X1, X2 peuvent alors être confondus. Un tel mode de réalisation permet de renforcer ou d'améliorer la compacité de l'unité de pulvérisation 3 et du module de pulvérisation. La déposante a réalisé de nombreux tests montrant que la plage de variation de vitesse de rotation de l'hélice 2a générant le flux d'air porteur, conjuguée avec la taille des gouttelettes 18 obtenue par l'atomiseur rotatif 30 dans cette plage présentait des caractéristiques de réglage satisfaisante et sans commune mesure avec les technologies existantes. Ainsi, le mode de réalisation basé sur un système d'entrainement à moteur électrique commun a pour effet de simplifier la réalisation et la gestion du module tout en augmentant sa compacité et sa fiabilité. Il a été démontré aussi que l'atomiseur rotatif 30 avait la capacité de transformer en gouttelettes 18 un débit de liquide pouvant varier sur une très large plage de valeurs de débit, sans commune mesure là aussi avec les solutions existantes, et l'intégralité des gouttelettes étant mélangées dans ce cas de façon assez homogène dans le flux d'air sans constater de perte de liquide par égouttage. De plus, la déposante a noté dans les essais conduits dans le domaine de la viticulture des gains de consommation énergétiques très importants par rapport aux principales technologies utilisées à ce jour.

On peut voir plus particulièrement, notamment sur les figures 1, 2, 3, 4a, 4b, que la tuyère 1 peut être formée par un conduit s'étendant le long d'un axe longitudinal X en délimitant intérieurement l'espace interne principal 1c et étant ouvert à ses extrémités pour former l'ouverture d'entrée d'air 1a et l'ouverture de sortie d'air 1b et que l'atomiseur rotatif 30 peut comprendre une surface de réception 30a prévue pour recevoir le liquide et pour assurer, à sa périphérie ou son extrémité 30b, à l'état de rotation dudit atomiseur rotatif 30 autour d'un premier axe de rotation X1, la fragmentation du liquide en gouttelettes 18 et leur propulsion dans le flux d'air porteur. On peut voir également que le ventilateur 2 peut comporter au moins une hélice 2a montée en rotation autour d'un second axe de rotation X2 et permettant de générer le flux d'air dans la tuyère 1 dans une direction axiale vers et au-delà de l'ouverture de sortie 1b.

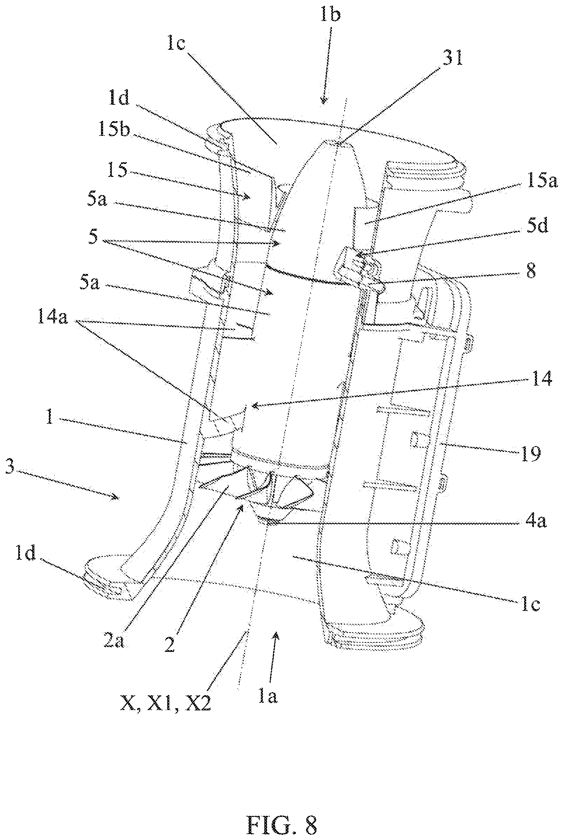

Si on se réfère maintenant à la figure 8 on peut voir que, dans un autre mode de réalisation, l'organe de pulvérisation peut consister en un ajutage 31 variable ou non. On comprendra par ajutage 31 selon la présente invention un ou plusieurs trou ou passages laissant passer le liquide, de préférence et de manière connue de petite taille, permettant de transformer, en un point de pulvérisation, le liquide sous pression en amont, acheminé par la canalisation 8, en gouttelettes en aval. On entendra par ajutage 31 variable, un dispositif comportant plusieurs ajutages pouvant délivrer chacun des débits différents, apte à positionner l'un d'entre eux en coopération avec la canalisation 8, par exemple du type connu et décrit dans le document FR 3 005 877 décrivant un dispositif support de buses pouvant comporter plusieurs buses et donc plusieurs ajutages, de tailles différentes et capables chacun d'être actionné et déplacé depuis un point inactif jusqu'au point de pulvérisation coopérant avec la canalisation 8, soit un dispositif apte à faire varier la taille de l'ajutage et donc du débit délivré, par exemple du type utilisant un système de pointeau mobile dont la coopération avec l'ajutage permet d'adapter la surface et la géométrie de passage du liquide.

Comme on peut le voir sur les figures 1, 2, 3, 4a, 4b, 5, 8 et 10 l'unité de pulvérisation 3 peut comprendre en outre un fuselage 5 interne présentant un profil aérodynamique défini par une surface latérale délimitant intérieurement un espace interne secondaire 5b et pouvant être maintenu sensiblement coaxialement dans l'espace interne principal 1c entre le ventilateur 2 et l'ouverture de sortie d'air 1b de sorte à définir, entre le fuselage 5 et la tuyère 1, un canal de circulation du flux d'air porteur entourant ledit fuselage 5.

Comme on peut le voir sur les figures 1, 2, 3, 4a, 4b, 5, 10, le fuselage 5 peut comprendre un tronçon rotatif à l'état de pulvérisation qui peut être formé par l'organe de pulvérisation 30 ou 31 consistant en l'atomiseur rotatif 30 lui-même de sorte que la périphérie ou l'extrémité 30b, de préférence lisse, de la surface de réception 30a puisse s'inscrire sensiblement dans la surface latérale du fuselage 5 tout en permettant la rotation de l'atomiseur rotatif 30 et la propulsion, de préférence sensiblement perpendiculairement à l'axe longitudinal X, des gouttelettes 18 dans ledit canal.

Comme on peut le voir sur la figure 8, le fuselage 5 peut comprendre un tronçon qui peut être formé par l'organe de pulvérisation 31 consistant en l'ajutage 31 variable ou non. Dans ce cas, l'ajutage 31 peut être intégré dans le fuselage 5, de préférence dans le tronçon formant l'extrémité du fuselage 5 tournée vers l'ouverture de sortie 1b et que l'ajutage 31 peut être pratiqué dans ladite extrémité du fuselage 5 en débouchant à l'extérieur. On comprendra que la canalisation 8, non visible sur la figure 8, peut traverser l'espace interne secondaire 5b du fuselage 5 jusqu'à l'ajutage 31, en amont de ce dernier.

Le canal de circulation du flux d'air peut alors entourer concentriquement le fuselage 5 le long de l'axe longitudinal X de la tuyère 1 et l'organe de pulvérisation 30 ou 31.

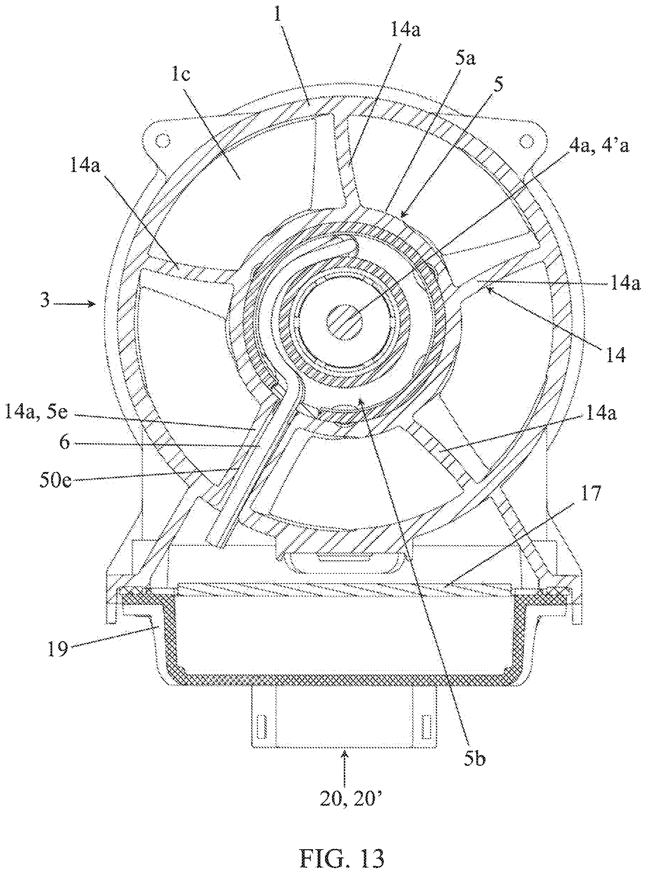

D'autre part on peut voir sur la figure 13 que l'unité de pulvérisation 3 peut comprendre des moyens de raccordement 6, pouvant comprendre des fils électriques, qui peuvent être prévus pour relier fonctionnellement l'interface d'alimentation en énergie 20' à l'unité électronique de commande et/ou de contrôle 17, au système d'entraînement de ventilateur 4, 4a, à la pompe électrique 11 et le cas échéant au système d'entraînement d'atomiseur rotatif 4', 4'a.

Les moyens de raccordement 6 peuvent également comprendre des fils électriques permettant de relier fonctionnellement l'unité électronique de commande et/ou de contrôle 17 à l'interface de communication individuelle 20 reliée fonctionnellement au pupitre de commande 16 et notamment à l'unité centrale électronique de pilotage 13.

De préférence, comme on peut le voir sur les figures 1, 2 et 13 l'interface d'alimentation en énergie 20' et l'interface de communication individuelle 20 peuvent être situées en un même point dans le module se présentant par exemple sous la forme d'un connecteur multivoies.

L'interface de communication individuelle 20 peut également être prévue pour comprendre un circuit de transmission radiofréquence permettant la transmission par voie radiofréquence des signaux de communication nécessaires au fonctionnement du module.

A l'état de fonctionnement de l'unité de pulvérisation 3, l'atomiseur rotatif 30, plus particulièrement la périphérie ou l'extrémité 30b de la surface de réception 30a rotative, peut ainsi être entourée entièrement par le flux d'air porteur généré par le ventilateur 2 de sorte à pouvoir propulser ou projeter toutes les gouttelettes dans l'espace du flux d'air, de préférence à l'intérieur de la tuyère 1 (voir notamment les figures 1, 2, 4a, 4b, 5, 10), ce qui a pour effet d'assurer leur mélange homogène dans ledit flux d'air qui les portera alors vers la cible (par exemple de la végétation) sous la forme d'un pinceau de traitement.

L'organe de pulvérisation 30 ou 31 peut être disposé, de préférence, à proximité de l'ouverture de sortie d'air 1b.

Ainsi, le fait que l'organe de pulvérisation 30 ou 31 forme une partie mobile ou fixe du fuselage 5 ou soit inscrit dans une partie de sa surface latérale ou d'extrémité, c'est-à-dire par exemple que la périphérie ou l'extrémité 30b de la surface de réception 30a de l'atomiseur rotatif 30 soit inscrite dans la surface latérale 5a du fuselage 5 ou que l'ajutage 31a soit inscrit dans la face d'extrémité du fuselage 5, permet, d'une part, de favoriser l'écoulement du flux d'air porteur autour de l'organe de pulvérisation 30 ou 31 et de limiter le nombre d'obstacles dans le flux d'air porteur ainsi que les turbulences générées par ce dernier en sortie de tuyère 1 et, d'autre part, de faciliter l'incorporation des gouttelettes 18 dans le flux d'air porteur pour les porter jusqu'à la cible 21. L'absence de dépôt et de gouttes de liquide sur la paroi interne de la tuyère 1 en sortie de module permet en outre de vérifier l'intégration de l'ensemble des gouttelettes au flux d'air porteur.

On notera que le fuselage 5, en dehors du tronçon formé par l'organe de pulvérisation 30 ou 31, peut être réalisé en plusieurs parties ou tronçons assemblées l'un(e) à l'autre, de préférence de manière amovible ou démontable, par exemple pour pouvoir accéder aux différents éléments contenus dans l'espace interne secondaire 5b du fuselage 5 afin de réaliser leur changement ou leur maintenance (figures 2, 3, 4a, 4b, 5 et 8).

L'hélice 2a du ventilateur 2 génère le flux d'air porteur lors de sa rotation et par aspiration de l'air ambiant par l'ouverture d'entrée d'air 1a.

De préférence, les premier et second axes de rotation X1, X2 respectifs de l'atomiseur rotatif 30 et de l'hélice 2a peuvent être confondus ou sensiblement confondus entre eux et, de préférence, confondus ou sensiblement confondus avec l'axe longitudinal X de la tuyère (figures 1, 2, 3, 4a, 4b, 5). Cette caractéristique est intéressante pour limiter l'encombrement de la tuyère 1 dans le plan perpendiculaire à l'axe commun.

De préférence, le système d'entraînement de ventilateur 4, 4a et le cas échéant le système d'entraînement d'atomiseur rotatif 4', 4'a peu(ven)t être logé(s) dans l'espace interne secondaire 5b du fuselage 5, ceci afin d'empêcher que le flux d'air porteur ne soit perturbé par la présence de ce ou ces systèmes d'entraînement.

Plus particulièrement, le cas échéant, le moteur sans balais présente les avantages d'une vitesse de rotation rapide, de préférence plus de 15000 tr/minute, d'une faible inertie pour assurer des changements de vitesse de rotation rapides et d'une faible masse.

Le fuselage 5 peut comprendre au moins un tronçon de refroidissement entourant le ou les moteurs électriques 4 et étant en contact avec le flux d'air porteur, ledit tronçon pouvant être réalisé en aluminium ou autre matériau favorisant le refroidissement ou limitant l'échauffement du ou des moteurs électriques 4 disposé(s) dans ce tronçon de fuselage 5.

De préférence, l'organe de pulvérisation 30, 31 peut être prévu de sorte à pouvoir éjecter les gouttelettes 18 dans une direction transversale sensiblement perpendiculaire à l'axe longitudinal X de la tuyère 1. Le cas échéant, la surface de réception 30a de l'atomiseur rotatif 30 peut être prévue pour s'étendre dans un plan sensiblement perpendiculaire à l'axe longitudinal X de la tuyère 1, ceci de sorte à pouvoir éjecter les gouttelettes 18 dans ladite direction transversale.

Dans une forme de réalisation préférentielle, l'atomiseur rotatif 30 peut présenter globalement une forme de disque ou de pièce tronconique ou conique et au moins l'une des faces externes du disque ou de la pièce tronconique ou conique peut former la surface de réception 30a (figures 1, 2, 3, 4a, 4b, 5, 6, 10).

La section du fuselage 5 et/ou de la tuyère 1 peut être variable, en dimensions et/ou en forme, le long de son axe longitudinal, comme on peut le voir sur les figures 2, 3, 4a, 4b, 5 et 8. Par exemple la section de la tuyère 1 peut être prévue pour être élargie au niveau de ses ouvertures d'entrée et de sortie d'air 1a, 1b. De préférence, l'ouverture de sortie d'air 1b peut présenter une forme ovale. Ainsi, le pinceau de gouttelettes 18 obtenu en sortie de tuyère, peut présenter une forme ovale et sensiblement aplatie au niveau de la végétation. Une telle forme ovale est particulièrement efficace pour obtenir un pinceau homogène, en combinaison, le cas échéant, avec le dispositif diffuseur 15a, 15b.

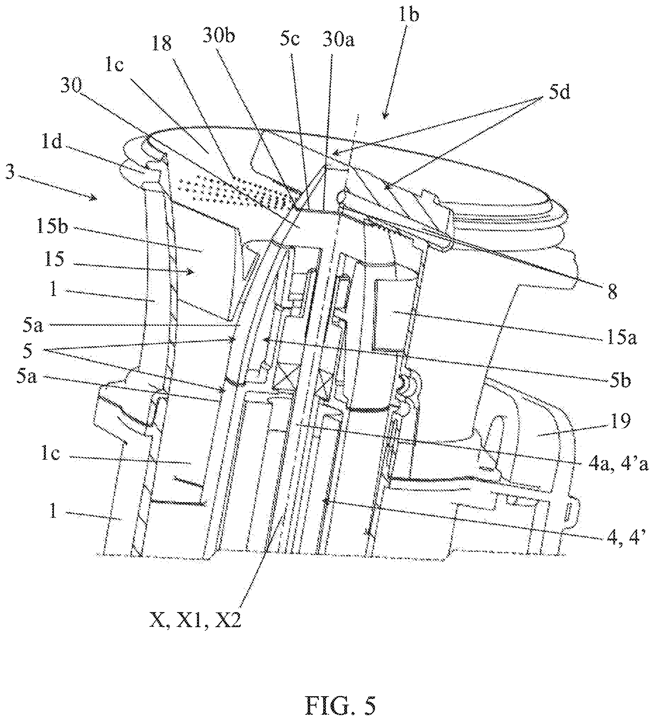

L'atomiseur rotatif 30 peut être percé centralement et axialement par un alésage 30c pour permettre le passage de l'arbre d'entraînement 4a permettant sa rotation autour du premier axe de rotation X1 (figures 2, 3, 4a, 4b, 6) via une liaison d'entraînement telle que par exemple une liaison par goupilles, clavettes, cannelures ou dentures, ou, comme on peut le voir sur les figures 1, 3, 4a, 4b, 6 par pincement ou coincement sur l'arbre d'entraînement 4a ou emmanchement en force de ce dernier dans l'alésage 3c. L'arbre d'entraînement 4a peut également être prévu dans une variante en étant réalisé en une seule pièce avec l'atomiseur rotatif 30 (figure 5).

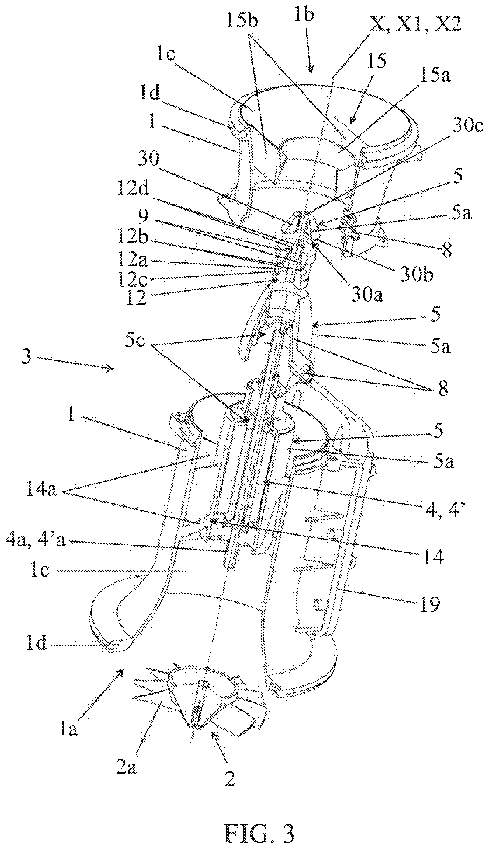

Dans une forme de réalisation préférentielle de la canalisation 8, 9, on peut voir, notamment sur les figures 3, 4a, 4b et 5, que celle-ci peut comprendre un conduit d'alimentation principal 8 prévu pour recevoir le liquide provenant du système d'alimentation en liquide 7, 11 et pour alimenter en liquide, directement ou indirectement, en au moins un point d'alimentation, l'organe de pulvérisation 30 ou 31, le cas échéant la surface de réception rotative 30a ou l'ajutage 31.

Si on se réfère aux figures 2, 3, 4a, 6, 7, on peut voir que dans le cas où un tel conduit d'alimentation principal 8 est prévu pour alimenter en liquide indirectement la surface de réception 30a de l'atomiseur rotatif 30, l'invention peut prévoir que la canalisation 8, 9 puisse comprendre en outre à cet effet au moins deux conduits d'alimentation secondaires 9 prévus chacun pour être raccordés audit conduit d'alimentation principal 8 et être situés dans l'espace interne secondaire 5b du fuselage 5. L'unité de pulvérisation peut comprendre en outre une pièce intermédiaire d'alimentation et de répartition 12 pouvant comporter les conduits d'alimentation secondaires 9 et pouvant être disposée dans l'espace interne secondaire 5b du fuselage 5 entre, d'une part, le ventilateur 2, le cas échéant le moteur électrique 4, et, d'autre part, l'atomiseur rotatif 30, à proximité immédiate de ce dernier de sorte que chaque conduit d'alimentation secondaire 9 puisse déboucher à l'écart du flux d'air porteur en regard et à proximité immédiate de la surface de réception 30a pour l'alimenter en liquide en au moins deux points d'alimentation, de préférence répartis de part et d'autre du premier axe de rotation X1, le cas échéant de part et d'autre de l'arbre d'entraînement 4a permettant d'assurer la rotation de la surface de réception 30a autour du premier axe de rotation X1.

La rotation à grande vitesse de la surface de réception 30a de l'atomiseur rotatif 30 a pour effet de répartir, en dehors du flux d'air porteur, le liquide reçu par cette dernière jusqu'à la périphérie ou l'extrémité 30b de ladite surface de réception 30a, c'est-à-dire jusque la ou l'une des arêtes formant sa périphérie ou son extrémité, où le liquide sera fragmenté en gouttelettes 18 qui seront alors projetées immédiatement dans le flux d'air porteur entourant l'atomiseur rotatif 30 et notamment la périphérie ou l'extrémité 30b de sa surface de réception 30a rotative.

Si on se réfère à nouveau aux figures 2, 3, 4a, 6 et 7, on peut voir que la pièce intermédiaire d'alimentation et de répartition 12 peut comprendre une gorge annulaire 12a de répartition du liquide qui peut comporter au moins deux orifices 12b débouchant chacun dans l'un des conduits d'alimentation secondaires 9. En outre, le conduit d'alimentation principal 8 peut être prévu pour déboucher dans la gorge annulaire 12a qui peut assurer ainsi la distribution du liquide, acheminé depuis la pompe électrique 11 par le conduit d'alimentation principal 8, dans les conduits d'alimentation secondaires 9.

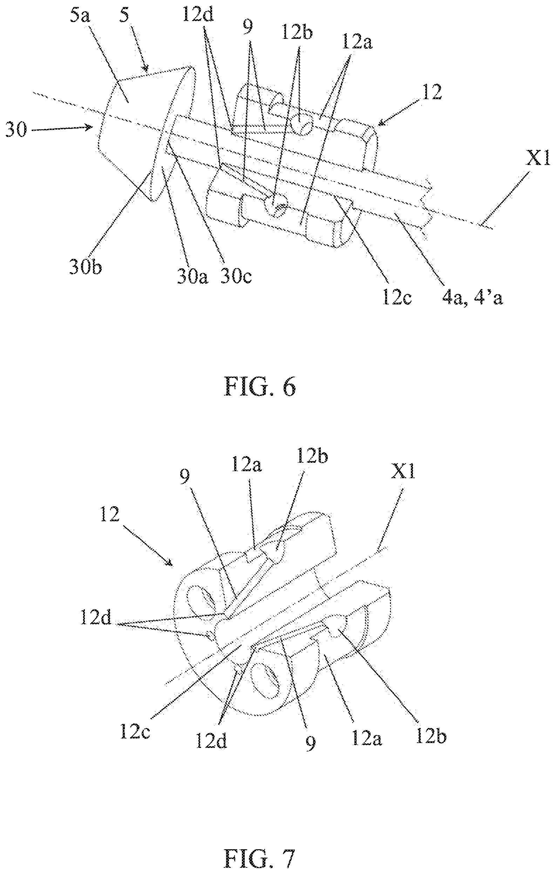

De préférence, comme on peut le voir notamment sur les figures 6 et 7, la pièce intermédiaire d'alimentation et de répartition 12 peut présenter une forme globalement cylindrique et peut être percée à l'une de ses faces d'extrémité, qui peut être orientée par exemple en étant tournée vers l'ouverture de sortie ou d'entrée d'air 1a ou 1b de la tuyère 1, par au moins deux trous d'alimentation 12d formant respectivement les points d'alimentation en liquide. En outre, la gorge annulaire 12a de répartition peut être pratiquée dans la face latérale externe de la pièce d'alimentation et de répartition 12 et les conduits d'alimentation secondaires 9 peuvent être pratiqués dans la matière de la pièce intermédiaire d'alimentation et de répartition 12 de sorte à déboucher à l'une de leurs extrémités dans la gorge annulaire 12a et à leur autre extrémité dans l'un desdits trous d'alimentation. D'autre part, le fuselage 5 peut être conçu dans sa partie recevant la pièce intermédiaire d'alimentation et de répartition 12 pour entourer la gorge annulaire en assurant une étanchéité fluidique avec cette dernière (voir notamment les figures 2, 4a et 5).

La pièce intermédiaire d'alimentation et de répartition 12 peut être traversée axialement par un alésage de passage 12c permettant le passage de l'arbre d'entraînement 4a entraînant en rotation l'atomiseur rotatif 30 (figures 2, 3, 4a, 6 et 7).

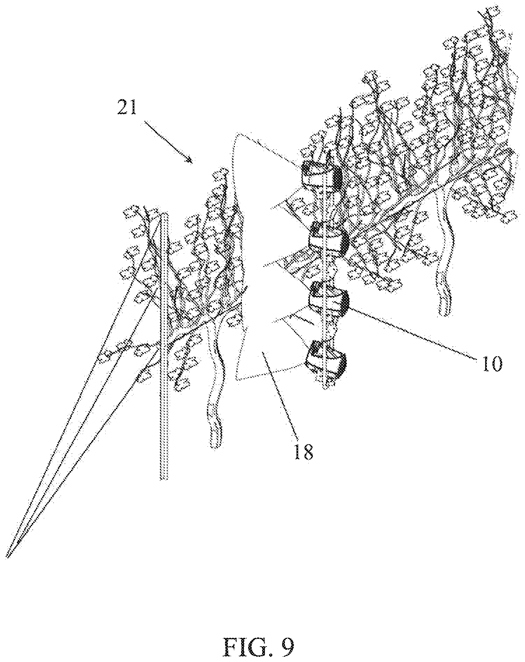

Le fuselage 5 s'étend longitudinalement ou axialement entre deux extrémités dont l'une, dite extrémité distale, est, à l'état monté dans la tuyère 1, la plus éloignée du ventilateur 2 ou la plus proche de l'ouverture de sortie 1b et l'autre, dite extrémité proximale, est la plus éloignée de l'ouverture de sortie 1b. Dans un mode réalisation préférentiel de la position axiale ou longitudinale du tronçon rotatif du fuselage 5 formé par l'atomiseur rotatif 30, l'invention peut prévoir que le tronçon rotatif puisse former l'extrémité distale du fuselage 5 (figures 1, 2, 3, 4a, 4b, 5, 9).

Comme on peut le voir sur les figures 1, 2, 3, 4a, 4b, 5, 10, la surface latérale 5a du fuselage 5 peut être fermée ou ajourée, continue ou discontinue. De préférence, afin de procurer une efficacité accrue de l'écoulement du flux d'air le long du fuselage 5 au moins jusqu'à son tronçon formé par l'organe de pulvérisation 30 ou 31, la surface latérale 5a peut être fermée, c'est-à-dire continue, le long du fuselage 5 au moins entre son extrémité proximale et l'organe de pulvérisation 30 ou 31.

Dans une première forme de réalisation du fuselage 5 associé à l'atomiseur rotatif 30, comme on peut le voir sur les figures 1, 2, 3, 4a, 4b, la surface de réception 30a de l'atomiseur rotatif 30 peut être située dans l'espace interne secondaire 5b et la continuité axiale ou longitudinale de surface latérale 5a du fuselage 5 peut être interrompue par une fente de passage 5c transversale permettant la propulsion des gouttelettes dans le flux d'air porteur à travers la surface latérale 5a du fuselage 5. La fente de passage 5c peut être délimitée par deux bords périphériques externes en vis-à-vis et l'un desdits bords périphériques externes peut être formé par la périphérie ou l'extrémité 30b de la surface de réception 30a. La fente de passage 5c permet en outre lors d'un arrêt de l'alimentation du liquide et toujours à l'état de rotation de l'atomiseur rotatif 30 de stopper immédiatement la diffusion des gouttelettes 18 en conservant le liquide par effet de capillarité à l'intérieur de l'espace interne secondaire 5b, effet de capillarité généré essentiellement par la proximité des bords périphériques de la fente de passage 5c au niveau de la surface latérale 5a du fuselage. Elle autorise de fait, dès reprise de l'alimentation en liquide la génération de gouttelettes par effet centrifuge au niveau de l'extrémité 30b de la surface de réception 30a. Dans cette première forme de réalisation du fuselage 5, l'atomiseur rotatif 30 peut présenter une forme d'ogive ou conique ou tronconique avec une face d'extrémité externe pouvant être située dans un plan sensiblement perpendiculaire à l'axe longitudinal X de la tuyère 1 et pouvant être tournée vers l'ouverture d'entrée 1a de la tuyère 1. Une telle face d'extrémité externe peut former la surface de réception 30a de l'atomiseur rotatif.

Dans une deuxième forme de réalisation du fuselage 5 associé à l'atomiseur rotatif 30 ou à l'ajutage 31, l'extrémité distale du fuselage 5 peut se terminer par une face d'extrémité externe, le cas échéant traversée par l'ajutage 31a, s'étendant dans un plan sensiblement perpendiculaire à l'axe longitudinal de la tuyère 1 et étant tournée vers l'ouverture de sortie d'air 1b. Une telle face d'extrémité externe peut former la surface de réception 30a de l'atomiseur rotatif 30 ou une face d'extrémité comprenant l'ajutage 31 (figure 5, figure 8).

Comme on peut le voir notamment sur les figures 3, 4a, 4b et 5, le fuselage 5 peut comprendre une extension latérale d'alimentation en liquide 5d qui peut présenter avantageusement un profil aérodynamique et dans laquelle extension peut être pratiquée un canal d'alimentation du liquide pouvant former au moins en partie le conduit d'alimentation principal 8. En outre, l'extension latérale d'alimentation en liquide 5d peut s'étendre transversalement, de préférence perpendiculairement, à l'axe longitudinal de la tuyère 1 dans le canal de circulation du flux d'air porteur.

Comme on peut le voir également sur la figure 13, le fuselage 5 peut comprendre une extension latérale d'alimentation électrique 5e pouvant présenter avantageusement un profil aérodynamique. En outre, l'extension latérale d'alimentation électrique 5e peut s'étendre transversalement, de préférence perpendiculairement, à l'axe longitudinal X de la tuyère 1 et peut être traversée par un canal d'alimentation électrique 50e formant un passage pour les moyens de raccordement 6 dans le canal de circulation du flux d'air porteur. De préférence, dans le cas où l'unité de pulvérisation 3 comprend une extension latérale d'alimentation en liquide 5d, l'extension latérale d'alimentation électrique 5e peut être diamétralement opposée à l'extension latérale d'alimentation en liquide 5d.

D'autre part, si on se réfère aux figures 2, 3, 4a, 4b, 5 et 13 on peut voir que, de sorte à pouvoir redresser le flux d'air porteur, présentant une forme hélicoïdale à la sortie de l'hélice 2a, dans l'axe de la tuyère 1 avant son contact avec les gouttelettes 18, la présente invention peut prévoir que l'unité de pulvérisation 3 puisse comprendre en outre un dispositif redresseur 14 s'étendant dans le canal de circulation du flux d'air porteur et pouvant être disposé axialement entre le ventilateur 2 et l'organe de pulvérisation 30 ou 31. De préférence le dispositif redresseur 14 peut être situé à proximité du ventilateur 2. Ainsi, grâce à un tel dispositif redresseur 14, il est possible d'obtenir en aval de ce dernier, un flux d'air porteur cohérent organisé en vitesse et direction sensiblement dans l'axe de la tuyère 1 de façon non laminaire pour un meilleur rendement énergétique avant son contact avec les gouttelettes.

Un tel dispositif redresseur 14 peut comprendre une pluralité d'éléments redresseurs 14a tels que des aubes, chaque aube 14a pouvant s'étendre entre deux bords d'extrémité dont l'un peut être fixé sur le fuselage 5, c'est-à-dire sur la face externe de sa surface, ou paroi, latérale 5a, et l'autre peut être fixé sur la tuyère 1, c'est-à-dire sur la face interne de cette dernière. L'ensemble ou la pluralité des éléments redresseurs 14 peut être réalisé(e) en une seule pièce, par exemple de façon combinée avec une partie de la tuyère 1 et une partie de la paroi du fuselage 5a.

Dans une forme de réalisation avantageuse, comme on peut le voir notamment sur la figure 13, le dispositif redresseur 14 peut comprendre l'extension latérale d'alimentation en liquide 5d et/ou l'extension latérale d'alimentation électrique 5e. Le cas échéant, comme on peut le voir sur cette figure 13, l'un des éléments redresseurs 14a peut comprendre l'extension latérale d'alimentation en liquide 5d et/ou l'extension latérale d'alimentation électrique 5e.

Par ailleurs, si on se réfère à nouveau aux figures 1, 2, 3, 4a, 4b, 5, 8, 10 on peut voir que l'unité de pulvérisation 3 peut comprendre en outre un dispositif diffuseur 15 s'étendant dans le canal de circulation du flux d'air porteur et que le dispositif diffuseur 15 peut être disposé axialement entre le ventilateur 2 et l'atomiseur rotatif 30 , de préférence à proximité de la surface de réception 30a.

Dans un mode de réalisation préférentiel (figures 1, 2, 3, 4a, 4b, 5, 10), le dispositif diffuseur 15 peut comprendre au moins trois éléments diffuseurs 15a, 15b, dont l'un, dit diffuseur central 15a, peut consister en une pièce creuse centrale de forme globalement cylindrique ou tronconique entourant le fuselage 5, tandis que les autres éléments diffuseurs, dits diffuseurs latéraux 15b, de préférence deux autres éléments diffuseurs, peuvent présenter chacun une forme d'aile aérodynamique s'étendant transversalement à l'axe dudit élément diffuseur 15a et être fixés sur la face latérale externe du diffuseur central 15a, de préférence en étant répartis de façon diamétralement opposée. Un tel dispositif diffuseur 15 a pour effet d'organiser de façon conjuguée avec l'ouverture de sortie d'air 1b de la tuyère 1, le mélange des gouttelettes 18 issues de l'atomiseur rotatif 30, notamment de sa surface de réception 30a tout en conservant les caractéristiques du flux d'air porteur cohérent et non laminaire issu du ventilateur 2 et du dispositif redresseur 14, et de les porter de façon homogène sous la forme d'un pinceau au niveau de la cible (par exemple de la végétation).

La fixation et le maintien du dispositif diffuseur 15 peut être réalisé, de préférence, en le fixant, par exemple par l'intermédiaire des éléments diffuseurs 15b en forme d'aile, sur la face interne de la tuyère 1 (figures 2, 3, 4a, 4b, 5).

Une telle unité de pulvérisation 3 permet d'obtenir une combinaison efficace de l'injection des gouttelettes 18, de préférence dans un plan ou une surface de projection sensiblement perpendiculaire à l'axe longitudinal X de la tuyère 1, dans un flux d'air porteur avec une vitesse élevée et adaptée. En effet, si la vitesse du flux d'air porteur est trop faible, une partie des gouttelettes 18 est projetée sur la paroi interne de la tuyère 1 ce qui génère un égouttage et une perte de liquide vers la cible 21 et si la vitesse du flux d'air porteur est trop élevée, le pinceau formé par celui-ci en sortie de tuyère 1 est alors focalisé et étroit, ce qui ne permet pas un mélange des gouttelettes dans tout le flux d'air en sortie de tuyère 1. Dans la présente invention, les gouttelettes 18 sont projetées dans le flux d'air porteur de façon préférentielle à l'intérieur de la tuyère 1, c'est-à-dire dans son espace principale 1c, de sorte que leur diffusion dans le flux d'air porteur n'est pas perturbée par l'atmosphère extérieure contrairement par exemple au système décrit dans le document US 6,152,382.

Si on se réfère à la figure 12, on peut voir que l'unité électronique de commande et/ou de contrôle 17 peut comprendre un microprocesseur et une mémoire pouvant contenir des codes représentatifs des paramètres de pulvérisation à régler et/ou un code d'identification Id dudit module, ainsi qu'un bus de communication interne vers les organes du module (système d'alimentation en liquide, système d'entrainement à moteur électrique, ...).

Le microprocesseur de l'unité électronique de commande et/ou de contrôle 17 peut être prévu pour déterminer au moins l'une des informations de contrôle suivantes :
- une information de température et/ou une information de courant/tension et/ou une information de vitesse relative(s) au fonctionnement du système d'entraînement de ventilateur 4, 4a,
- une information de température et/ou une information de courant/tension relative et/ou une information de vitesse relative(s) au fonctionnement de la pompe électrique 11,
- le cas échéant, une information de température et/ou une information de courant/tension relative(s) et/ou une information de vitesse relative(s) au fonctionnement du système d'entraînement d'atomiseur rotatif 4',4'a,
- une information relative au code d'identification Id dudit module de pulvérisation.

Le microprocesseur de l'unité électronique de commande et/ou de contrôle 17 peut encore être prévu pour recevoir de l'unité centrale électronique de pilotage 13 au moins l'une des informations de consigne suivantes :
- une information de consigne relative au fonctionnement du système d'entraînement de ventilateur 4, 4a,
- une information de consigne relative au fonctionnement de la pompe électrique 11,
- le cas échéant, une information de consigne relative au fonctionnement du système d'entraînement d'atomiseur rotatif 4', 4'a.

Le module de pulvérisation peut comprendre en outre un logement 19 adapté pour abriter l'unité électronique de commande et/ou de contrôle 17, ledit logement pouvant être disposé à l'intérieur ou en dehors de l'espace interne 1c de la tuyère 1 en étant solidaire de cette dernière ou du support 10.

D'autre part, la tuyère 1 peut comprendre une paroi latérale 1d s'étendant longitudinalement entre son entrée d'air 1a et sa sortie d'air 1b et le logement 19 peut être fixé sur la face externe de la paroi latérale 1d de la tuyère 1 ou peut être intégré dans ladite paroi latérale.

Le module de pulvérisation peut comprendre un carter 10 capable d'abriter au moins l'unité de pulvérisation 3, la tuyère 1 et l'unité électronique de commande et/ou de contrôle 17. Un tel carter peut former avantageusement au moins en partie le support 10 de fixation de la pompe électrique 11.

Si on se réfère notamment aux figures 1, 2, 3, 4a, 4b, 5, 8, 10 on peut voir que le carter 10 peut être fixé par exemple sur la tuyère 1, par exemple par encliquetage ou emboitage. A cet effet, le carter 10 peut présenter une forme globalement cylindrique dont les extrémités ouvertes comportent chacune une nervure interne 10a globalement circulaire ou ovale et la tuyère 1 peut comprendre à chacune de ses extrémités une rainure 1d globalement circulaire ou ovale adaptée pour recevoir par encliquetage ou emboîtement l'une des nervures internes 10a. Le carter 10 peut être réalisé en deux demi coques.

Les figures annexées, comme on peut le voir notamment sur la figure 12, montrent également un système de pulvérisation et de pilotage destiné à être embarqué sur une machine ou un engin mobile, ledit système comprenant une pluralité de modules de pulvérisation pour la pulvérisation d'un liquide sous forme de gouttelettes 18 pour le traitement d'une cible telle que par exemple une haie végétale 21, ledit liquide provenant d'un réservoir 26.

Conformément à la présente invention, un tel système de pulvérisation et de pilotage comprend en outre un pupitre de commande 16 comprenant une unité centrale électronique de pilotage 13 et une interface homme machine 16a, dite IHM, reliée à cette dernière, chaque module de pulvérisation consistant en un module de pulvérisation compact tel que défini selon l'invention.

Toujours conformément à l'invention, et comme on peut le voir sur la figure 12, l'unité centrale électronique de pilotage 13 est reliée fonctionnellement à chaque module de pulvérisation de sorte à permettre un pilotage individuel à distance de chaque module de pulvérisation, indépendamment du ou des autres modules de pulvérisation, à partir du pupitre de commande 16 pour pouvoir régler individuellement les paramètres de pulvérisation et de fonctionnement de chaque module de pulvérisation.

Un tel système de pulvérisation et de pilotage peut comprendre un bus de communication central 25 permettant de relier fonctionnellement chaque module de pulvérisation au pupitre de commande 16.

Dans une forme de réalisation de la communication, non représentée, entre le pupitre de commande 16 et les modules de pulvérisation, le pupitre de commande 16 peut être prévu pour comprendre une interface de communication centrale radiofréquence et l'interface de communication individuelle 20 de chaque module de pulvérisation peut consister en une interface de communication radio fréquence de sorte à permettre le pilotage individuel de chaque module de pulvérisation par voie radiofréquence.

Toujours en se référant à la figure 12, on peut voir que le système de pulvérisation et de pilotage peut comprendre en outre un système de détection 24 relié fonctionnellement à l'unité centrale électronique de pilotage 13, le cas échéant par l'intermédiaire du bus de communication central 25 ou par radiofréquence, et ledit système de détection peut être adapté pour détecter une absence ou une présence de la cible et/ou un profil de cible et pour transmettre à l'unité centrale électronique de pilotage 13 une information relative à ladite détection de sorte à réaliser le pilotage individuel de chaque module de pulvérisation en fonction de ladite information détectée.

Le système de détection 24 peut comprendre :
- des moyens de détection de présence 24a permettant de détecter la présence ou l'absence de la cible 2 et pouvant être adaptés pour transmettre à l'unité centrale électronique de pilotage 13 un signal représentatif de cette détection, ladite unité centrale électronique de pilotage étant adaptée pour permettre en fonction de cette détection le pilotage d'au moins l'un des modules de pulvérisation en commandant et contrôlant la mise en marche, respectivement l'arrêt, du fonctionnement de sa propre pompe électrique 11 et de son système d'entraînement de ventilateur 4, 4a et, le cas échéant, de son système d'entraînement d'atomiseur rotatif 4', 4'a, et/ou
- des moyens de détection de profil de cible 24b permettant de détecter une grandeur physique apportant une information sur le profil de la cible 21, tel que sa surface ou sa densité, et étant adaptés pour transmettre à l'unité centrale électronique de pilotage 13 un signal représentatif de cette information, ladite unité centrale électronique de pilotage étant adaptée pour permettre le pilotage individuel de chaque module de pulvérisation en fonction de cette information en commandant et en contrôlant soit le fonctionnement de la pompe électrique 11 pour régler le débit du liquide alimentant l'organe de pulvérisation 30, 31 et le fonctionnement du système d'entraînement de ventilateur 4, 4a pour régler le la vitesse du flux d'air et, le cas échéant, le fonctionnement du système d'entraînement d'atomiseur rotatif 4', 4'a pour régler la taille des gouttelettes 18.

Dans une forme de réalisation préférentiel des moyens de détection de présence 24a, ceux-ci peuvent consister, par exemple, en un ou plusieurs capteurs de détection du type, par exemple, à ultrason, laser ou à infra-rouge.

L'IHM 16a peut comprendre un écran d'affichage 160a prévu pour afficher de manière visuelle au moins l'une des informations de contrôle et/ou au moins l'une des informations de consigne telles que définies précédemment, ce en vue de pouvoir contrôler et suivre en temps réel le fonctionnement de chaque module de pulvérisation directement à partir du pupitre de commande 16. Par exemple, un tel écran d'affichage permet d'afficher les vitesses d'air et la quantité de liquide pulvérisé par les modules de pulvérisation.

L'IHM 16a peut également comprendre des périphériques tels qu'un joystick 160b et/ou des boutons poussoirs permettant à l'utilisateur de réaliser les différents commandes, réglages ou contrôles du système, par exemple le réglage d'un mode manuel ou automatique du système, le réglage du débit de liquide à pulvériser à partir de tel ou tel module de pulvérisation sélectionné ou encore le réglage de la largeur de rang en sélectionnant en fonction de cette largeur le nombre de module de pulvérisation à mettre en marche.

Le système de pulvérisation et de pilotage selon la présente invention peut comprendre en outre un dispositif de calibrage de la pompe électrique 11 de chaque module permettant d'appliquer un facteur de correction sur la pompe électrique 11 concernée directement depuis le pupitre de commande 16 de façon à assurer la précision nécessaire du débit de liquide pulvérisé.

Ainsi, dans un tel système de pulvérisation et de pilotage, le pupitre de commande 16, et plus particulièrement son unité centrale électronique de pilotage 13, peut être considéré comme étant la partie maître du système et les unités de commande et de contrôle électronique 17 des modules de pulvérisation peuvent être considérés comme étant des parties esclaves du système permettant de commander et de contrôler les éléments de puissance des modules.

Un tel système permet de réduire au maximum la quantité de produit (le liquide) appliqué sur la cible 21, tel qu'une vigne, et permet par exemple d'apporter les fonctionnalités et les avantages suivants :
- réglage du débit et de la largeur de rang sur le pupitre de commande 16 dans le but de modifier automatiquement le débit, par exemple depuis la cabine de l'engin mobile 23, supprimant le contact entre l'utilisateur et le produit phytosanitaire (liquide),
- variations du débit de la pompe électrique 11 proportionnellement à la vitesse d'avancement de l'engin mobile 23,
- réglage du débit/vitesse d'air sur chaque module de pulvérisation afin d'optimiser l'application du liquide sur la cible 21, comme par exemple dans le cas où la cible 21 est une vigne, mettre plus de produit (liquide sous forme de gouttelettes) sur la zone fructifère, ou par exemple arrêter le fonctionnement des modules de pulvérisation qui ne sont pas nécessaires en début de traitement,

- détection de la cible afin de déclencher et d'arrêter la pulvérisation lorsque le système détecte la cible 21 (par exemple de la végétation) en entrée de rang ou ne détecte plus de cible 21 en fin de rang,
- permettre à l'utilisateur de corréler les informations affichées sur le pupitre de commande 16 avec la quantité de liquide (bouillie) préparé en début de traitement afin de vérifier que la bonne quantité de produit à été appliquée sur la cible,
- contrôle et suivi en temps réel du système de pulvérisation permettant de connaître par exemple la consommation électrique de chaque module de pulvérisation, la vitesse de rotation de chaque pompe électrique 11, la vérification en temps réel de la communication entre le pupitre de commande 16 et les modules de pulvérisation,
- permettre de diagnostiquer le système depuis le pupitre de commande 16, et donc par exemple depuis la cabine de l'engin mobile 23 où se trouve ledit pupitre, ainsi que le fonctionnement avant et pendant le traitement afin de déceler immédiatement tout disfonctionnement pouvant influer sur la qualité de traitement,
- calibrage simplifier des pompes électriques 11 de chaque module, de sorte à permettre que chaque pompe électrique 11 soit réglée le plus précisément possible en appliquant un facteur de correction sur la pompe électrique 11 directement depuis le pupitre de commande 16.

La présente invention a encore pour objet un procédé de pilotage d'une pluralité de module de pulvérisation d'un système de pulvérisation et de pilotage pour la pulvérisation d'un liquide sous forme de gouttelettes pour le traitement d'une cible 21 telle que par exemple une haie végétale, ledit liquide provenant d'un réservoir 26, ledit système de pulvérisation et de pilotage étant défini selon la présente invention.

Conformément à la présente invention, un tel procédé consiste à piloter individuellement chaque module de pulvérisation, indépendamment des autres modules de pulvérisation, à partir du pupitre de commande 16 du système de pulvérisation et de pilotage pour régler et/ou contrôler individuellement les paramètres de fonctionnement et de pulvérisation de chaque module de pulvérisation.

Dans une forme de réalisation préférentielle du procédé, celui-ci peut consister à piloter individuellement, à partir du pupitre de commande 16, chaque module de pulvérisation en fonction de la présence ou de l'absence de la cible et/ou en fonction du profil de cible détectés à partir du système de détection 24. Plus particulièrement, le procédé peut consister à réaliser, à partir du pupitre de commande 16, le pilotage individuel de chaque module de pulvérisation en commandant et en contrôlant :
- suite à la détection de présence, respectivement d'absence, de la cible, grâce aux moyens de détection de présence 24a dudit système de détection 24, la mise en marche, respectivement l'arrêt, du fonctionnement de la pompe électrique 11 et du système d'entraînement de ventilateur 4, 4a et, le cas échéant, du système d'entraînement d'atomiseur rotatif 4', 4'a,
   ou
- suite à la détection de la grandeur physique apportant une information sur le profil de la cible 21, tel que sa surface ou sa densité, en fonction de ladite information, le fonctionnement de la pompe électrique 11 pour régler le débit du liquide alimentant l'organe de pulvérisation 30 ou 31 et le fonctionnement du système d'entraînement de ventilateur 4, 4a pour régler la vitesse du flux d'air et, le cas échéant, le fonctionnement de l'atomiseur rotatif 30 pour régler la taille des gouttelettes 18.

Bien entendu, l'invention n'est pas limitée aux modes ou formes de réalisation décrits et représentés aux dessins annexés. Des modifications restent possibles, notamment du point de vue de la constitution des divers éléments ou par substitution d'équivalents techniques, sans sortir pour autant du domaine de protection de l'invention suivant les revendications annexées.

## Revendications

1. Module de pulvérisation compact pour la pulvérisation d'un liquide sous forme de gouttelettes (18) pour le traitement d'une cible (21) telle que par exemple une haie végétale et destiné à équiper un système de pulvérisation et de pilotage comprenant une pluralité de modules de pulvérisation et un pupitre de commande (16) permettant le pilotage individuel à distance de chaque module de pulvérisation, indépendamment des autres modules, ledit module de pulvérisation comprenant une unité de pulvérisation (3) comprenant une tuyère (1) avec une ouverture d'entrée d'air (1a) à l'une de ses extrémités et une ouverture de sortie d'air (1b) à son autre extrémité, ladite tuyère entourant le long de son axe (X) un espace interne (1c) contenant au moins un organe de pulvérisation (30, 31), une canalisation (8, 9) pour l'alimentation en liquide de ce dernier, un ventilateur (2) capable de générer axialement dans l'espace interne (1c) de la tuyère (1) un flux d'air porteur autour dudit organe de pulvérisation pour porter vers la cible (21) les gouttelettes créées et propulsées par ce dernier dans ledit flux d'air, de préférence dans l'espace interne (1c), et un système d'entraînement de ventilateur (4, 4a) pour l'entraînement dudit ventilateur, **caractérisé en ce qu'**il comprend en outre :
- un système d'alimentation en liquide (7, 11) relié fonctionnellement à la canalisation (8, 9) et comprenant une pompe électrique (11), de préférence une pompe volumétrique, plus préférentiellement une pompe péristaltique, le cas échéant associée à un capteur de débit, permettant de refouler, avec un débit variable contrôlé, le liquide, provenant d'un réservoir (26), dans ladite canalisation (8, 9) et une interface de raccordement (7) permettant audit système de recevoir le liquide provenant du réservoir (26),
- un support (10) permettant de maintenir fixement la pompe électrique (11) à proximité de l'unité de pulvérisation,
- une unité électronique de commande et/ou de contrôle (17), par exemple implantée sur une carte électronique, prévue pour commander et/ou contrôler le fonctionnement du système d'entraînement de ventilateur (4, 4a) et du système d'alimentation en liquide (7, 11) en étant reliée fonctionnellement auxdits systèmes d'entraînement et d'alimentation en liquide,
- un interface de communication individuelle (20) permettant de relier fonctionnellement le module, directement ou indirectement, au pupitre de commande (16) et une interface d'alimentation en énergie (20') apte à être reliée fonctionnellement à une source d'énergie électrique (22) pour permettre l'alimentation en énergie dudit module.

2. Module de pulvérisation, selon la revendication 1, **caractérisé en ce que** l'organe de pulvérisation consiste en un atomiseur rotatif (30) monté en rotation autour d'un axe de rotation (X1) et **en ce qu'**il comprend en outre un système d'entraînement d'atomiseur rotatif (4', 4'a) à moteur électrique prévu pour pouvoir transmettre le couple et la rotation à l'atomiseur rotatif (30), ce dernier étant capable, sous l'effet de sa rotation, de fragmenter par centrifugation le liquide en gouttelettes (18) et de les propulser dans le flux d'air porteur, de préférence dans un plan sensiblement perpendiculaire à l'axe de la tuyère (1).

3. Module de pulvérisation, selon la revendication 2, **caractérisé en ce que** le système d'entraînement d'atomiseur rotatif (4', 4'a) comprend un moteur électrique (4'), de préférence un moteur électrique sans balais, relié fonctionnellement à l'unité électronique de commande et/ou de contrôle (17) et un arbre d'entraînement (4'a) apte à être entraîné en rotation autour de son axe de rotation (X1) par ledit moteur électrique et à transmettre le couple et la rotation à l'atomiseur rotatif (30).

4. Module de pulvérisation, selon la revendication 2 ou la revendication 3, **caractérisé en ce que** le système d'entraînement de ventilateur (4, 4a) et le système d'entraînement d'atomiseur rotatif (4', 4a) forment un seul système d'entraînement de ventilateur et d'atomiseur rotatif commun à la fois au ventilateur (2) et à l'atomiseur rotatif (3) et **en ce que** ledit système d'entraînement de ventilateur et d'atomiseur rotatif commun comprend un unique moteur électrique (4, 4') commun, de préférence un moteur électrique sans balais, relié fonctionnellement à l'unité électronique de commande et/ou de contrôle (10) et un unique arbre d'entraînement commun (4a, 4'a) apte à être entraîné en rotation autour de son axe (X1, X2) par ledit moteur électrique commun et à transmettre le couple et la rotation à la fois au ventilateur (2) et à l'atomiseur rotatif (30).

5. Module de pulvérisation, selon l'une quelconque des revendications 1 à 4, **caractérisé en ce que** l'unité électronique de commande et/ou de contrôle (17) comprend un microprocesseur (17a), une mémoire (17b) contenant des codes représentatifs des paramètres de pulvérisation à régler et/ou un code d'identification (Id) dudit module, et un bus de communication interne (17c).

6. Module de pulvérisation, selon la revendication 5, **caractérisé en ce que** le microprocesseur (17a) est configuré pour déterminer au moins l'une des informations de contrôle suivantes :
- une information de température et/ou une information de courant/tension et/ou une information de vitesse relative(s) au fonctionnement du système d'entraînement de ventilateur (4, 4a),
- une information de température et/ou une information de courant/tension relative et/ou une information de vitesse relative(s) au fonctionnement de la pompe électrique (11),
- le cas échéant, une information de température et/ou une information de courant/tension relative(s) et/ou une information de vitesse relative(s) au fonctionnement du système d'entraînement d'atomiseur rotatif (4',4'a),
- une information relative au code d'identification (Id) dudit module de pulvérisation.

7. Module de pulvérisation, selon la revendication 5 ou la revendication 6, **caractérisé en ce que** le microprocesseur (17a) est configuré pour recevoir de l'unité centrale électronique de pilotage (13) au moins l'une des informations de consigne suivantes :
- une information de consigne relative au fonctionnement du système d'entraînement de ventilateur (4, 4a),
- une information de consigne relative au fonctionnement de la pompe électrique (11),
- le cas échéant, une information de consigne relative au fonctionnement du système d'entraînement d'atomiseur rotatif (4', 4'a).

8. Module de pulvérisation, selon l'une quelconque des revendications 1 à 7, **caractérisé en ce qu'**il comprend en outre un logement (19) adapté pour abriter l'unité électronique de commande et/ou de contrôle (17), ledit logement étant disposé à l'extérieur de l'espace interne (1c) de la tuyère (1) en étant solidaire de cette dernière ou du support (10).

9. Module de pulvérisation, selon la revendication 8, **caractérisé en ce que** la tuyère (1) comprend une paroi latérale (1d) s'étendant longitudinalement entre son entrée d'air (1a) et sa sortie d'air (1b) et **en ce que** le logement (19) est fixé sur la face externe de la paroi latérale (1d) de la tuyère (1) ou est intégré dans ladite paroi latérale.

10. Module de pulvérisation, selon l'une quelconque des revendications 1 à 9, **caractérisé en ce qu'**il comprend un carter (10) capable d'abriter au moins l'unité de pulvérisation (3), la tuyère (1) et l'unité électronique de commande et/ou de contrôle (17), ledit carter formant au moins en partie le support (10) de fixation de la pompe électrique (11).

11. Module de pulvérisation, selon l'une quelconque des revendications 2 à 10, **caractérisé en ce que** le système d'entraînement de ventilateur (4', 4'a) comprend un moteur électrique (4'a), de préférence un moteur électrique sans balais, relié fonctionnellement à l'unité électronique de commande et/ou de contrôle (17) et un arbre d'entraînement (4') apte à être entraîné en rotation autour de son axe par ledit moteur électrique et à transmettre le couple et la rotation du ventilateur (7).

12. Système de pulvérisation et de pilotage destiné à être embarqué sur une machine ou un engin mobile (23), ledit système comprenant une pluralité de modules de pulvérisation pour la pulvérisation d'un liquide sous forme de gouttelettes (18) pour le traitement d'une cible telle que par exemple une haie végétale (21), ledit liquide provenant d'un réservoir, **caractérisé en ce qu'**il comprend en outre un pupitre de commande (16) comprenant une unité centrale électronique de pilotage (13) et une interface homme machine (16a), dite IHM, reliée à cette dernière, chaque module de pulvérisation consistant en un module de pulvérisation compact tel que défini selon l'une quelconque des revendications 1 à 11 et **en ce que** l'unité centrale électronique de pilotage (13) est reliée fonctionnellement à chaque module de pulvérisation de sorte à permettre un pilotage individuel à distance de chaque module de pulvérisation, indépendamment du ou des autres modules de pulvérisation, à partir dudit pupitre de commande pour régler individuellement les paramètres de pulvérisation et de fonctionnement de chaque module de pulvérisation.

13. Système de pulvérisation et de pilotage, selon la revendication 12, **caractérisé en ce qu'**il comprend un bus de communication central (25) permettant de relier fonctionnellement chaque module de pulvérisation au pupitre de commande (16).

14. Système de pulvérisation et de pilotage, selon la revendication 12, **caractérisé en ce que** le pupitre de commande comprend une interface de communication centrale radiofréquence (130a) et **en ce que** l'interface de communication individuelle (20) de chaque module est une interface de communication radio fréquence de sorte à permettre le pilotage individuel de chaque module de pulvérisation par voie radiofréquence.

15. Système de pulvérisation et de pilotage, selon l'une quelconque des revendications 12 à 14, **caractérisé en ce qu'**il comprend en outre un système de détection (24) relié fonctionnellement à l'unité centrale électronique de pilotage (13), le cas échéant par l'intermédiaire du bus de communication central (25) ou par radiofréquence, et **en ce que** ledit système de détection est adapté pour détecter une absence ou une présence de la cible et/ou un profil de cible et pour transmettre à l'unité centrale électronique de pilotage (13) une information relative à ladite détection de sorte à réaliser le pilotage individuel de chaque module de pulvérisation en fonction de ladite information détectée.

16. Système de pulvérisation et de pilotage, selon la revendication 15, **caractérisé en ce que** le système de détection (24) comprend :
- des moyens de détection de présence (24a) permettant de détecter la présence ou l'absence de la cible (2) et étant adaptés pour transmettre à l'unité centrale électronique de pilotage (13) un signal représentatif de cette détection, ladite unité centrale électronique de pilotage étant adaptée pour permettre en fonction de cette détection le pilotage d'au moins l'un des modules de pulvérisation en commandant et contrôlant la mise en marche, respectivement l'arrêt, du fonctionnement de sa propre pompe électrique (11) et de son système d'entraînement de ventilateur (4, 4a) et, le cas échéant, de son système d'entraînement d'atomiseur rotatif (4',4'a),
- et/ou des moyens de détection de profil de cible (24b) permettant de détecter une grandeur physique apportant une information sur le profil de la cible (21), telle que sa surface ou sa densité, et étant adaptés pour transmettre à l'unité centrale électronique de pilotage (13) un signal représentatif de cette information, ladite unité centrale électronique de pilotage étant adaptée pour permettre le pilotage individuel de chaque module de pulvérisation en fonction de cette information en commandant et en contrôlant soit le fonctionnement de la pompe électrique (11) pour régler le débit du liquide alimentant l'organe de pulvérisation (30, 31) et le fonctionnement du système d'entraînement de ventilateur (4, 4a) pour régler le la vitesse du flux d'air et, le cas échéant, le fonctionnement du système d'entraînement d'atomiseur rotatif (4', 4'a) pour régler la taille des gouttelettes (18).

17. Système de pulvérisation et de pilotage, selon la revendication 16, **caractérisé en ce que** les moyens de détection consistent en un ou plusieurs capteurs de détection du type à ultrason, laser ou à infra-rouge.

18. Système de pulvérisation et de pilotage, selon l'une quelconque des revendications 12 à 17, **caractérisé en ce que** l'interface homme machine (16a) comprend un écran d'affichage (160a) prévu pour afficher de manière visuelle au moins l'une des informations de contrôle telles que définies dans la revendication 6 et/ou au moins l'une des informations de consigne telles que définies dans la revendication 7, ce en vue de pouvoir contrôler et suivre en temps réel le fonctionnement de chaque module de pulvérisation directement à partir du pupitre de commande (16).

19. Système de pulvérisation et de pilotage, selon l'une quelconque des revendications 12 à 18, **caractérisé en ce qu'**il comprend en outre un dispositif de calibrage de la pompe électrique (11) de chaque module permettant d'appliquer un facteur de correction sur la pompe électrique (11) concernée directement depuis le pupitre de commande (16).

20. Procédé de pilotage d'une pluralité de module de pulvérisation d'un système de pulvérisation et de pilotage pour la pulvérisation d'un liquide sous forme de gouttelettes (18) pour le traitement d'une cible (21) telle que par exemple une haie végétale, ledit liquide provenant d'un réservoir, ledit système de pulvérisation et de pilotage étant défini selon l'une quelconque des revendications 12 à 19, **caractérisé en ce qu'**il consiste à piloter individuellement chaque module de pulvérisation, indépendamment des autres modules de pulvérisation, à partir du pupitre de commande (16) relié fonctionnellement à chaque module de pulvérisation pour régler et/ou contrôler individuellement les paramètres de fonctionnement et de pulvérisation de chaque module de pulvérisation.

21. Procédé de pilotage, selon la revendication 20 **caractérisé en ce qu'**il consiste à piloter individuellement, à partir du pupitre de commande (16), chaque module de pulvérisation en fonction de la présence ou de l'absence de la cible et/ou en fonction du profil de cible détectés à partir du système de détection (24) tel que défini dans la revendication 15 ou la revendication 16.

22. Procédé de pilotage, selon la revendication 21 prise en combinaison avec la revendication 16 ou la revendication 17, **caractérisé en ce qu'**il consiste à réaliser, à partir du pupitre de commande (16), le pilotage individuel de chaque module de pulvérisation en commandant et en contrôlant :
- suite à la détection de présence, respectivement d'absence, de la cible, grâce aux moyens de détection de présence (24a) dudit système de détection (24), la mise en marche, respectivement l'arrêt, du fonctionnement de la pompe électrique (11) et du système d'entraînement de ventilateur (4, 4a) et, le cas échéant, du système d'entraînement d'atomiseur rotatif (4', 4'a) tel que défini dans la revendication 2,
ou
- suite à la détection de la grandeur physique apportant une information sur le profil de la cible (21), tel que sa surface ou sa densité, en fonction de ladite information, le fonctionnement de la pompe électrique (11) pour régler le débit du liquide alimentant l'organe de pulvérisation (30, 31) et le fonctionnement du système d'entraînement de ventilateur (4, 4a) pour régler le la vitesse du flux d'air et, le cas échéant, le fonctionnement de l'atomiseur rotatif (30) pour régler la taille des gouttelettes (18).

## Patentansprüche

1. Kompaktes Sprühmodul zum Sprühen einer Flüssigkeit in Form von Tröpfchen (18) zur Behandlung eines Ziels (21), wie beispielsweise einer Gemüsehecke, und zum Ausrüsten eines Sprüh- und Steuerungssystems, das eine Vielzahl von Sprühmodulen und ein Bedienfeld (16) zur individuellen Fernsteuerung jedes Sprühmoduls umfasst, unabhängig von den anderen Modulen, wobei das Sprühmodul eine Sprüheinheit (3) umfasst, die eine Düse (1) mit einer Lufteinlassöffnung (1a) an einem ihrer Enden und einer Luftauslassöffnung (1b) an ihrem anderen Ende umfasst, wobei die Düse entlang ihrer Achse (X) einen Innenraum (1c) umgibt, der mindestens ein Sprühelement (30, 31), eine Leitung (8, 9) zum Zuführen von Flüssigkeit zu diesem enthält, einen Ventilator (2), der in der Lage ist, im Innenraum (1c) einer Düse (1) axial einen Trägerluftstrom um das Sprühelement herum zu erzeugen, um die von diesem in dem Luftstrom erzeugten und angetriebenen Tröpfchen in Richtung des Ziels (21) zu tragen, vorzugsweise im Innenraum (1c), und ein Ventilatorantriebssystem (4, 4a) zum Antreiben des Ventilators, **dadurch gekennzeichnet, dass** es ferner umfasst:
- ein Flüssigkeitsversorgungssystem (7, 11), das funktionell mit der Leitung (8, 9) verbunden ist und eine elektrische Pumpe (11), vorzugsweise eine Verdrängerpumpe, besonders bevorzugt eine Peristaltikpumpe, die gegebenenfalls einem Durchflusssensor zugeordnet ist, umfasst, um die Flüssigkeit aus einem Vorratsbehälter (26) mit einem kontrollierten variablen Durchfluss in die Leitung (8, 9) zu fördern, und eine Verbindungsschnittstelle (7), die es dem System ermöglicht, die Flüssigkeit aus dem Vorratsbehälter (26) aufzunehmen,
- eine Halterung (10) zum festen Halten der elektrischen Pumpe (11) in der Nähe der Sprüheinheit,
- eine elektronische Befehls- und/oder Steuereinheit (17), beispielsweise auf einer elektronischen Platine, die dazu bestimmt ist, den Betrieb des Ventilatorantriebssystems (4, 4a) und des Flüssigkeitsversorgungssystems (7, 11) zu steuern und/oder zu überwachen, indem sie funktionell mit den Flüssigkeitsversorgungs- und Antriebssystemen verbunden ist, eine individuelle Kommunikationsschnittstelle (20) zum funktionellen Verbinden des Moduls direkt oder indirekt mit dem Bedienfeld (16) und eine Energieversorgungsschnittstelle (20'), die funktionell mit einer elektrischen Energiequelle (22) verbunden werden kann, um die Energieversorgung des Moduls zu ermöglichen.

2. Sprühmodul nach Anspruch 1,
**dadurch gekennzeichnet, dass**
das Sprühelement aus einem Rotationszerstäuber (30) besteht, der sich um eine Drehachse (X1) dreht, und dass es ferner ein Rotationszerstäuberantriebssystem (4',4'a) mit Elektromotor umfasst, der dazu bestimmt ist, Drehmoment und Drehung auf den Rotationszerstäuber (30) übertragen zu können, der unter der Wirkung seiner Drehung in der Lage ist, die Flüssigkeit durch Zentrifugation in Tröpfchen (18) zu brechen und in den Trägerluftstrom zu treiben, vorzugsweise in einer Ebene im Wesentlichen senkrecht zur Achse der Düse (1).

3. Sprühmodul nach Anspruch 2,
**dadurch gekennzeichnet, dass**
das Rotationszerstäuberantriebssystem (4', 4'a) einen Elektromotor (4'), vorzugsweise einen bürstenlosen Elektromotor, der funktionell mit der elektronischen Befehls- und/oder Steuereinheit (17) verbunden ist, und eine Antriebswelle (4'a) umfasst, die um ihre Drehachse (X1) durch den Elektromotor in Drehung versetzt und Drehmoment und Drehung auf den Rotationszerstäuber (30) übertragen werden kann.

4. Sprühmodul nach Anspruch 2 oder Anspruch 3,
**dadurch gekennzeichnet, dass**
das Ventilatorantriebssystem (4, 4a) und das Rotationszerstäuberantriebssystem (4', 4a) einen einzigen Gebläse- und Rotationszerstäuberantrieb bilden, der sowohl dem Ventilator (2) als auch dem Rotationszerstäuber (3) gemeinsam ist, und dass das gemeinsame Gebläse- und Rotationszerstäuberantriebssystem einen einzigen, gemeinsamen Elektromotor (4, 4') umfasst, vorzugsweise einen bürstenlosen Elektromotor, der funktionell mit der elektronischen Befehls- und/oder Steuereinheit (10) und einer einzigen gemeinsamen Antriebswelle (4a, 4'a) verbunden ist, die durch den gemeinsamen Elektromotor um ihre Achse (X1, X2) drehbar angetrieben werden kann und Drehmoment und Drehung sowohl auf den Ventilator (2) als auch auf den Rotationszerstäuber (30) überträgt.

5. Sprühmodul nach einem der Ansprüche 1 bis 4,
**dadurch gekennzeichnet, dass**
die elektronische Befehls- und/oder Steuereinheit (17) einen Mikroprozessor (17a), einen Speicher (17b), der Codes enthält, die für die einzustellenden Sprühparameter repräsentativ sind, und/oder einen Identifikationscode (Id) des Moduls und einen internen Kommunikationsbus (17c) umfasst.

6. Sprühmodul nach Anspruch 5,
**dadurch gekennzeichnet, dass**
der Mikroprozessor (17a) konfiguriert ist, um mindestens eine der folgenden Steuerinformationen zu bestimmen:
- eine Temperaturinformation und/oder eine Strom-/Spannungsinformation und/oder eine Geschwindigkeitsinformation in Relation zum den Betrieb des Ventilatorantriebssystems (4, 4a),
- Eine Temperaturinformation und/oder eine relative Strom-/Spannungsinformation und/oder eine Geschwindigkeitsinformation relativ zum Betrieb der Elektropumpe (11),
- Gegebenenfalls eine Temperaturinformation und/oder eine Strom-/Relativspannungsinformation und/oder eine Geschwindigkeitsinformation relativ zum Betrieb des Rotationszerstäuberantriebssystems (4', 4'a),
- Eine Information über den Identifizierungscode (Id) des Sprühmoduls.

7. Sprühmodul nach Anspruch 5 oder Anspruch 6,
**dadurch gekennzeichnet, dass**
der Mikroprozessor (17a) konfiguriert ist, um von der zentralen elektronischen Steuereinheit (13) mindestens eine der folgenden Sollwertinformationen zu empfangen:
- eine Anweisungsinformation bezüglich des Betriebs des Ventilatorantriebssystems (4, 4a),
- eine Anweisungsinformation bezüglich des Betriebs der Elektropumpe (11),
- gegebenenfalls eine Sollwertinformation über den Betrieb des Rotationszerstäuberantriebssystems (4', 4'a).

8. Sprühmodul nach einem der Ansprüche 1 bis 7,
**dadurch gekennzeichnet, dass**
es ferner ein Gehäuse (19) umfasst, das zur Aufnahme der elektronischen Befehls- und/oder Steuereinheit (17) geeignet ist, wobei das Gehäuse außerhalb des Innenraumes (1c) der Düse (1) angeordnet ist, während es mit dieser oder dem Träger (10) integral ist.

9. Sprühmodul nach Anspruch 8,
**dadurch gekennzeichnet, dass**
die Düse (1) eine Seitenwand (1d) umfasst, die sich in Längsrichtung zwischen ihrem Lufteinlass (1a) und ihrem Luftauslass (1b) erstreckt, und dass das Gehäuse (19) an der Außenfläche der Seitenwand (1d) der Düse (1) befestigt oder in diese Seitenwand integriert ist.

10. Sprühmodul nach einem der Ansprüche 1 bis 9,
**dadurch gekennzeichnet, dass**
es ein Gehäuse (10) umfasst, das in der Lage ist, mindestens die Sprühvorrichtung (3), die Düse (1) und die elektronische Steuer- und/oder Steuereinheit (17) aufzunehmen, wobei das Gehäuse zumindest teilweise den Träger (10) zur Befestigung der Elektropumpe (11) bildet.

11. Sprühmodul nach einem der Ansprüche 2 bis 10,
**dadurch gekennzeichnet, dass**
das Ventillatorantriebssystem (4', 4'a) einen Elektromotor (4'a), vorzugsweise einen bürstenlosen Elektromotor, der funktionell mit der elektronischen Befehls- und/oder Steuereinheit (17) verbunden ist, und eine Antriebswelle (4') umfasst, die durch den Elektromotor um ihre Achse gedreht werden kann und das Drehmoment und die Drehung des Ventilators (7) übertragen.

12. Sprüh- und Steuersystem, das dazu bestimmt ist, auf einer Maschine oder einer mobilen Vorrichtung (23) eingesetzt zu werden, wobei das System eine Vielzahl von Sprühmodulen zum Sprühen einer Flüssigkeit in Form von Tröpfchen (18) zur Behandlung eines Ziels, wie beispielsweise einer Gemüsehecke (21), umfasst, wobei die Flüssigkeit aus einem Reservoir kommt, **dadurch gekennzeichnet, dass** es ferner ein Bedienfeld (16) umfasst, das eine zentrale elektronische Steuereinheit (13) und eine damit verbundene Mensch-Maschine-Schnittstelle (16a), genannt HMI, umfasst, wobei jedes Sprühmodul aus einem kompakten Sprühmodul nach einem der Ansprüche 1 bis 11 besteht und dass die zentrale elektronische Steuereinheit (13) mit jedem Sprühmodul funktionell verbunden ist, um eine individuelle Fernsteuerung jedes Sprühmoduls unabhängig von den anderen Sprühmodulen von dem Bedienfeld aus zu ermöglichen, um die Sprüh- und Betriebsparameter jedes Sprühmoduls individuell einzustellen.

13. Sprüh- und Steuersystem nach Anspruch 12,
**dadurch gekennzeichnet, dass**
es einen zentralen Kommunikationsbus (25) zum funktionellen Verbinden jedes Sprühmoduls mit dem Bedienfeld (16) umfasst.

14. Sprüh- und Steuersystem nach Anspruch 12,
**dadurch gekennzeichnet, dass**
das Bedienfeld eine zentrale Radiokommunikationsschnittstelle (130a) umfasst und dass die individuelle Kommunikationsschnittstelle (20) jedes Moduls eine Radiokommunikationsschnittstelle ist, um die individuelle Steuerung jedes Sprühmoduls durch Radiofrequenz zu ermöglichen.

15. Sprüh- und Steuersystem nach einem der Ansprüche 12 bis 14,
**dadurch gekennzeichnet, dass**
es ferner ein Detektionssystem (24) umfasst, das funktionell mit der zentralen elektronischen Steuereinheit (13) verbunden ist, gegebenenfalls über den zentralen Kommunikationsbus (25) oder über Radiofrequenz, und dass das Detektionssystem angepasst ist, um ein Fehlen oder Vorhandensein des Ziels und/oder eines Zielprofils zu detektieren und Informationen über die Erfassung an die zentrale elektronische Steuereinheit (13) zu übertragen, um die individuelle Steuerung jedes Sprühmoduls gemäß den erfassten Informationen durchzuführen.

16. Sprüh- und Steuersystem nach Anspruch 15,
**dadurch gekennzeichnet, dass**
das Detektionssystem (24) umfasst: :
- Anwesenheitsdetektionsmittel (24a) zum Detektieren des Vorhandenseins oder Fehlens des Ziels (2) und zum Übertragen eines für diese Erfassung repräsentativen Signals an die zentrale elektronische Steuereinheit (13), wobei die zentrale elektronische Steuereinheit angepasst ist, um gemäß dieser Erfassung die Steuerung mindestens eines der Sprühmodule durch Steuern und Überwachen des Starts oder Stopps des Betriebs seiner eigenen Elektropumpe (11) und seines Ventilatorantriebssystems (4, 4a) und, falls zutreffend, seines Rotationszerstäuberantriebssystems (4', 4'a) zu ermöglichen,
- und/oder Zielprofil-Detektionsmittel (24b) zum Detektieren einer physikalischen Größe, die Informationen über das Profil des Ziels (21), wie seine Oberfläche oder Dichte, bereitstellt und geeignet ist, an die zentrale elektronische Steuereinheit (13) ein für diese Informationen repräsentatives Signal zu übertragen, wobei die zentrale elektronische Steuereinheit angepasst ist, um eine individuelle Steuerung jedes Sprühmoduls gemäß dieser Information zu ermöglichen, indem sie entweder den Betrieb der Elektropumpe (11) zum Regeln der Durchflussmenge der das Sprühelement (30, 31) zuführenden Flüssigkeit und den Betrieb des Ventilatorantriebssystems (4, 4a) zum Regeln der Geschwindigkeit des Luftstroms und, falls erforderlich, den Betrieb des Rotationszerstäuberantriebssystems (4', 4'a) zum Einstellen der Tropfengröße (18) steuert und überwacht.

17. Sprüh- und Steuersystem nach Anspruch 16,
**dadurch gekennzeichnet, dass**
die Detektionssmittel aus einem oder mehreren Erfassungssensoren vom Ultraschall-, Laser- oder Infrarottyp bestehen.

18. Sprüh- und Steuersystem nach einem der Ansprüche 12 bis 17,
**dadurch gekennzeichnet, dass**
die Mensch-Maschine-Schnittstelle (16a) einen Anzeigebildschirm (160a) beinhaltet, der zum visuellen Anzeigen mindestens einer der in Anspruch 6 definierten Steuerinformationen und/oder mindestens einer der in Anspruch 7 definierten Sollwertinformationen vorgesehen ist, um den Betrieb jedes Sprühmoduls direkt vom Bedienfeld (16) aus in Echtzeit steuern und überwachen zu können.

19. Sprüh- und Steuerungssystem nach einem der Ansprüche 12 bis 18,
**dadurch gekennzeichnet, dass**
es ferner eine Vorrichtung zum Kalibrieren der Elektropumpe (11) jedes Moduls umfasst, die es ermöglicht, einen Korrekturfaktor auf die betreffende Elektropumpe (11) direkt vom Bedienfeld (16) aus anzuwenden.

20. Verfahren zum Steuern einer Vielzahl von Sprühmodulen eines Sprüh- und Steuerungssystems zum Sprühen einer Flüssigkeit in Form von Tröpfchen (18) zum Behandeln eines Ziels (21), wie beispielsweise einer Gemüsehecke, wobei die Flüssigkeit aus einem Speicher entnommen wird und das Sprüh- und Steuerungssystem nach einem der Ansprüche 12 bis 19 definiert ist, **dadurch gekennzeichnet, dass** es darin besteht, jedes Sprühmodul unabhängig von den anderen Sprühmodulen vom Bedienfeld (16) aus einzeln zu steuern, die funktionell mit jedem Sprühmodul verbunden ist, um die Betriebs- und Sprühparameter jedes Sprühmoduls einzeln einzustellen und/oder zu steuern.

21. Steuerverfahren nach Anspruch 20,
**dadurch gekennzeichnet, dass**
es darin besteht, jedes Sprühmodul einzeln vom Bedienfeld (16) aus gemäß dem Vorhandensein oder Fehlen des Ziels und/oder gemäß dem vom Detektionssystem (24) erfassten Zielprofil nach Anspruch 15 oder Anspruch 16 zu steuern.

22. Steuerverfahren nach Anspruch 21 in Kombination mit Anspruch 16 oder Anspruch 17, **dadurch gekennzeichnet, dass**
es darin besteht, vom Bedienfeld (16) aus die individuelle Steuerung jedes Sprühmoduls durch Steuern und Überwachen durchzuführen:
- nach der Detektion des Vorhandenseins oder Nichtvorhandenseins des Ziels mit Hilfe der Anwesenheitsdetektionsmittel (24a) des Detektionssystems (24) den Betrieb der Elektropumpe (11) und des Ventilatorantriebssystems (4, 4a) und gegebenenfalls des Rotationszerstäubungsantriebssystems (4', 4', 4' a) nach Anspruch 2 zu starten oder zu stoppen, oder
- nach dem Detektieren der physikalischen Größe, die Informationen über das Profil des Ziels (21), wie seine Oberfläche oder Dichte, gemäß dieser Information liefert, den Betrieb der Elektropumpe (11) zum Regeln der Durchflussmenge der dem Sprühelement (30, 31) zugeführten Flüssigkeit und den Betrieb des Ventilatorantriebssystems (4, 4a) zum Regeln der Geschwindigkeit des Luftstroms und, falls erforderlich, den Betrieb des Rotationszerstäubers (30) zum Regeln der Größe der Tröpfchen (18).

## Claims

1. A compact sprayer device for the spraying of a liquid in the form of droplets (18) for the treatment of a target (21), such as, for example, a vegetal hedge, and intended to equip a sprayer and control system including a plurality of sprayer devices and a control console (16) that makes possible the remote individual control of each sprayer device independently of the other devices, said sprayer device comprising a sprayer unit (3) comprising a nozzle (1) with an air inlet opening (1a) at one of its ends and an air outlet opening (1b) at its other end, said nozzle surrounding, along its axis (X), an internal space (1c) that contains at least one sprayer element (30, 31), a piping (8, 9) for the supply with liquid to the latter, a fan (2) that can axially generate in the internal space (1c) of the nozzle (1) a stream of carrier air around said sprayer element to carry toward the target (21) the droplets that are created and propelled by the latter in said stream of air, preferably in the internal space (1c), and a fan drive system (4, 4a) for driving said fan, **characterized in that** it furthermore includes:
- a liquid supply system (7, 11) that is functionally connected to the piping (8, 9) and comprising an electric pump (11), preferably a volumetric pump, more preferably a peristaltic pump, if appropriate associated with a flow rate sensor, making it possible to push back, at a controlled variable flow rate, the liquid originating from a reservoir (26), in said piping (8, 9), and a connecting interface (7) making it possible for said system to receive the liquid originating from the reservoir (26),
- a support (10) that makes it possible to fixedly hold the electric pump (11) close to the sprayer unit,
- an electronic control and/or monitoring unit (17), for example implanted on a printed circuit board, provided for the purpose of controlling and/or monitoring the functioning of the fan drive system (4, 4a) and the liquid supply system (7, 11) by being functionally connected to said drive system and liquid supply system,
- an individual communication interface (20) making it possible to functionally connect the device, directly or indirectly, to the control console (16), and an energy supply interface (20') that can be functionally connected to an electrical energy source (22) to make possible the energy supply of said device.

2. The sprayer device according to Claim 1, **characterized in that** the sprayer element consists of a rotary atomizer (30) that is mounted in rotation about an axis of rotation (X1) and **in that** it furthermore includes a rotary atomizer drive system (4', 4'a) with an electric motor provided for the purpose of being able to transmit torque and rotation to the rotary atomizer (30), with the latter being able, under the effect of its rotation, to break up the liquid into droplets (18) by centrifuging, and to propel them into the stream of carrier air, preferably in a plane that is substantially perpendicular to the axis of the nozzle (1).

3. The sprayer device according to Claim 2, **characterized in that** the rotary atomizer drive system (4', 4a') includes an electric motor (4'), preferably a brushless electric motor, functionally connected to the electronic control and/or monitoring unit (17), and a drive shaft (4'a) that can be driven in rotation about its axis of rotation (X1) by said electric motor and can transmit torque and rotation to the rotary atomizer (30).

4. The sprayer device according to Claim 2 or Claim 3, **characterized in that** the fan drive system (4, 4a) and the rotary atomizer drive system (4', 4a) form a single fan and rotary atomizer drive system that is common to both the fan (2) and the rotary atomizer (3), and **in that** said common fan and rotary atomizer drive system comprises a single common electric motor (4, 4'), preferably a brushless electric motor, functionally connected to the electronic control and/or monitoring unit (10) and a single common drive shaft (4a, 4'a) that is able to be driven in rotation about its axis (X1, X2) by said common electric motor and is able to transmit torque and rotation both to the fan (2) and to the rotary atomizer (30).

5. The sprayer device according to any one of Claims 1 to 4, **characterized in that** the electronic control and/or monitoring unit (17) comprises a microprocessor (17a), a memory (17b) containing codes that are representative of the spraying parameters to be adjusted and/or an identification code (Id) of said device, and an internal communication bus (17c).

6. The sprayer device according to Claim 5, **characterized in that** the microprocessor (17a) is configured for determining at least one of the following pieces of monitoring information:
- temperature information and/or current/voltage information and/or speed information, relating to the functioning of the fan drive system (4, 4a),
- temperature information and/or current/voltage information and/or speed information, relating to the functioning of the electric pump (11),
- if applicable, temperature information and/or current/voltage information and/or speed information relating to the functioning of the rotary atomizer drive system (4', 4'a),
- information relating to the identification code (Id) of said sprayer device.

7. The sprayer device according to Claim 5 or Claim 6, **characterized in that** the microprocessor (17a) is configured for receiving from the electronic central control unit (13) at least one of the following pieces of setpoint information:
- setpoint information relating to the functioning of the fan drive system (4, 4a),
- setpoint information relating to the functioning of the electric pump (11),
- if applicable, setpoint information relating to the functioning of the rotary atomizer drive system (4', 4'a).

8. The sprayer device according to any one of Claims 1 to 7, **characterized in that** it furthermore comprises a housing (19), adapted to protect the electronic control and/or monitoring unit (17), said housing being disposed on the exterior of the internal space (1c) of the nozzle (1) by being integral with the latter or with the support (10).

9. The sprayer device according to Claim 8, **characterized in that** the nozzle (1) includes a side wall (1d) extending longitudinally between its air inlet (1a) and its air outlet (1b), and **in that** the housing (19) is fixed on the external face of the side wall (1d) of the nozzle (1) or is integrated in said side wall.

10. The sprayer device according to any one of Claims 1 to 9, **characterized in that** it comprises a casing (10) that can protect at least the sprayer unit (3), the nozzle (1) and the electronic control and/or monitoring unit (17), said casing forming at least in part the support (10) for fixing the electric pump (11).

11. The sprayer device according to any one of Claims 2 to 10, **characterized in that** the fan drive system (4', 4'a) includes an electric motor (4'a), preferably a brushless electric motor, functionally connected to the electronic control and/or monitoring unit (17), and a drive shaft (4') that can be driven in rotation about its axis by said electric motor and can transmit torque and rotation to the fan (7).

12. A sprayer and control system intended to be installed on board a machine or a mobile machine (23), said system comprising a plurality of sprayer devices for the spraying of a liquid in the form of droplets (18) for the treatment of a target such as, for example, a vegetal hedge (21), said liquid originating from a reservoir, **characterized in that** it furthermore comprises a control console (16) comprising an electronic central control unit (13) and a man-machine interface (16a), a so-called MMI, connected to the latter, with each sprayer device consisting of a compact sprayer device as defined according to any one of Claims 1 to 11 and **in that** the electronic central control unit (13) is functionally connected to each sprayer device so as to permit remote individual control of each sprayer device independently of the other sprayer device(s), from said control console, to adjust individually the spraying and functioning parameters of each sprayer device.

13. The sprayer and control system according to Claim 12, **characterized in that** it comprises a central communication bus (25) that makes it possible to functionally connect each sprayer device to the control console (16).

14. The sprayer and control system according to Claim 12, **characterized in that** the control console comprises a radiofrequency central communication interface (130a) and **in that** the individual communication interface (20) of each device is a radiofrequency communication interface so as to permit the individual control of each sprayer device by radiofrequency means.

15. The sprayer and control system according to any one of Claims 12 to 14, **characterized in that** it furthermore comprises a detection system (24) functionally connected to the electronic central control unit (13), if applicable by means of the central communication bus (25) or by radiofrequency, and **in that** said detection system is adapted to detect an absence or a presence of the target and/or a target profile and to transmit to the electronic central control unit (13) information relating to said detection so as to carry out the individual control of each sprayer device as a function of said detected information.

16. The sprayer and control system according to Claim 15, **characterized in that** the detection system (24) includes:
- presence detection means (24a) that make it possible to detect the presence or absence of the target (2) and being adapted to transmit to the electronic central control unit (13) a signal that is representative of this detection, said electronic central control unit being adapted to make possible, as a function of this detection, the control of at least one of the sprayer devices by controlling and monitoring the starting-up or respectively the stopping of the functioning of its own electronic pump (11) and its fan drive system (4, 4a), and, if applicable, its rotary atomizer drive system (4', 4'a),
- and/or target profile detection means (24b) that make it possible to detect a physical magnitude providing information on the profile of the target (21), such as its area or its density, and being adapted to transmit to the electronic central control unit (13) a signal that is representative of this information, said electronic central control unit being adapted to make possible the individual control of each sprayer device as a function of this information by controlling and monitoring namely the functioning of the electric pump (11) to adjust the flow rate of the liquid supplying the sprayer element (30, 31), and the functioning of the fan drive system (4, 4a) to adjust the speed of the air stream and, if applicable, the functioning of the rotary atomizer drive system (4', 4'a) to adjust the size of the droplets (18).

17. The sprayer and control system according to Claim 16, **characterized in that** the detection means consist of one or more detection sensors of the ultrasound, laser or infrared type.

18. The sprayer and control system according to any one of Claims 12 to 17, **characterized in that** the man-machine interface (16a) comprises a display screen (160a) that is provided for displaying in a visual manner at least one of the pieces of monitoring information as defined in Claim 6 and/or at least one of the pieces of setpoint information as defined in Claim 7, for the purpose of being able to monitor and track in real time the functioning of each sprayer device directly from the control console (16).

19. The sprayer and control system according to any one of Claims 12 to 18, **characterized in that** it furthermore comprises a calibration device of the electric pump (11) of each device, making it possible to apply a correction factor to the electric pump (11) in question, directly from the control console (16).

20. A method for controlling a plurality of sprayer devices of a sprayer and control system for the spraying of a liquid in the form of droplets (18) for the treatment of a target (21) such as, for example, a vegetal hedge, said liquid originating from a reservoir, said sprayer and control system being defined according to any one of Claims 12 to 19, **characterized in that** it consists in controlling individually each sprayer device, independently of the other sprayer devices, from the control console (16) functionally connected to each sprayer device to adjust and/or monitor individually the functioning and spraying parameters of each sprayer device.

21. The control method according to Claim 20, **characterized in that** it consists in controlling individually, from the control console (16), each sprayer device as a function of the presence or the absence of the target and/or as a function of the target profile detected from the detection system (24) as defined in Claim 15 or Claim 16.

22. The control method according to Claim 21, combined with Claim 16 or Claim 17, **characterized in that** it consists in carrying out, from the control console (16), the individual control of each sprayer device by controlling and by monitoring:
- following the detection of the presence or respectively the absence of the target, owing to the presence detection means (24a) of said detection system (24), the starting-up or respectively the stopping of the functioning of the electric pump (11) and of the fan drive system (4, 4a) and, if applicable, the rotary atomizer drive system (4', 4'a) as defined in Claim 2,
or
- following the detection of the physical magnitude providing information on the profile of the target (21), such as its area or its density, as a function of said information, the functioning of the electric pump (11) for adjusting the flow rate of the liquid supplying the sprayer element (30, 31) and the functioning of the fan drive system (4, 4a) for adjusting the speed of the air stream and, if applicable, the functioning of the rotary atomizer (30) to adjust the size of the droplets (18).
